(19) Europäisches Patentamt
European Patent Office
Office européen des brevets

(11) **EP 3 954 634 B1**

(12) **EUROPÄISCHE PATENTSCHRIFT**

(45) Veröffentlichungstag und Bekanntmachung des Hinweises auf die Patenterteilung:
**27.03.2024 Patentblatt 2024/13**

(21) Anmeldenummer: **21186613.2**

(22) Anmeldetag: **20.07.2021**

(51) Internationale Patentklassifikation (IPC):
**B65G 17/22** *(2006.01)* **B65G 17/34** *(2006.01)*
**B65G 21/22** *(2006.01)* **B65G 23/06** *(2006.01)*

(52) Gemeinsame Patentklassifikation (CPC):
**B65G 17/22; B65G 17/34; B65G 21/22; B65G 23/06**

(54) **TRANSPORTSYSTEM SOWIE BEHANDLUNGSMASCHINE MIT EINEM SOLCHEN TRANSPORTSYSTEM**

TRANSPORT SYSTEM AND TREATMENT MACHINE WITH SUCH A TRANSPORT SYSTEM

SYSTÈME DE TRANSPORT, AINSI QUE MACHINE DE TRAITEMENT DOTÉE D'UN TEL SYSTÈME DE TRANSPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.08.2020 DE 202020104720 U**

(43) Veröffentlichungstag der Anmeldung:
**16.02.2022 Patentblatt 2022/07**

(73) Patentinhaber: **TAKTOMAT kurvengesteuerte Antriebssysteme GmbH**
**86554 Pöttmes (DE)**

(72) Erfinder:
• **Hofstetter, Norbert**
**86676 Hollenbach (DE)**
• **Kumeth, Siegmund**
**Deinshof 7 92280 Kastl (DE)**
• **Hofstetter, Michael**
**86676 Hollenbach (DE)**

(74) Vertreter: **Glück Kritzenberger Patentanwälte PartGmbB**
**Franz-Mayer-Str. 16a**
**93053 Regensburg (DE)**

(56) Entgegenhaltungen:
EP-A1- 0 554 551        EP-A1- 2 806 547
DE-A1-102013 206 961    DE-A1-102014 109 157
DE-A1-102018 100 409    US-A1- 2010 022 358

**Beschreibung**

Die Erfindung bezieht sich auf ein Transportsystem zur Beförderung von Gegenständen entlang einer Transportstrecke sowie auf eine Behandlungsmaschine mit einem solchen Transportsystem.

Transportsysteme mit umlaufenden Transportelementen, die von kettenartig miteinander verbundenen Transportpaletten gebildet sind, sind in verschiedenen Ausführungen und für verschiedene Anwendungen bekannt.

Auch sind aus dem Stand der Technik bereits Transportsysteme bekannt, bei denen das Transportelement entlang einer Transportstrecke bewegt wird, deren Bewegungsbahn sowohl einen linearen und als auch einen radialen Anteil aufweist. In der Regel ist hierfür zumindest entlang der linearen Bewegung des Transportelementes eine beidseitige Führungseinrichtung der Transportpaletten vorgesehen, die die Transportpaletten parallel der Bewegungsbahn führt.

Entlang der Transportstrecke der Transportpaletten eines derartigen Transportsystems erfolgt beispielsweise eine Inspektion und/oder Bearbeitung und/oder Behandlung von Gegenständen oder Werkstücken. Die Behandlung erfolgt dann beispielsweise auf den sich zwischen dem Kettenrad und der Umlenkung erstreckenden Teillängen der Schlaufe bzw. an den dortigen Abschnitten einer Bewegungsbahn, auf der sich die Transportpaletten oder Basiselementen bzw. die Achsen der Kettengelenke zwischen den Transportpaletten bewegen.

Nachteilig bei derartigen Transportsystemen ist, dass die Transportpaletten eine bestimmte Länge aufweisen, die dann auch dem Teilungsabstand bzw. dem Teilungswinkel des kettenartigen Transportelementes und des Kettenrades entspricht, und dass insbesondere bei einer größeren Länge bzw. bei einem größeren Teilungsabstand, beispielsweise bei einem Teilungsabstand zwischen 80 mm und 150 mm sich der von Kettenantrieben bekannte Polygoneffekt stark bemerkbar macht, so dass zwar bei einem getakteten Antrieb des Kettenrades grundsätzlich ein Weiterschalten des kettenartigen Transportelementes in jedem Bewegungstakt um einen einzigen Teilungsabstand des Transportelementes bzw. Teilungswinkel des Kettenrades problemlos möglich ist, nicht aber ein Weiterschalten in Schritten größer als der Teilungsabstand, also beispielsweise einer Weiterschaltung mit einer Taktung, die zwei, drei oder vier Teilungsabstände umfasst.

Insbesondere ist wegen des Polygoneffekts beim Antrieb des Kettenstranges mit einem Schrittrad der Form eines gleichmäßigen Polygons eine Ausgleichskurven erforderlich, um eine konstante Kettenspannung und eine sauber mechanische Funktionsweise des Kettensystems zu erreichen.

Beispielsweise ist aus der auf die Anmelderin zurückgehenden Druckschrift DE 10 2012 104 213 A1 ein Transportsystem bekannt geworden, welches insbesondere für die Verwendung bei Behandlungsmaschinen, vorzugsweise bei Montage- und/oder Fertigungsautomaten bestimmt ist und das zur Vermeidung des sog. Polygoneffektes im Bereich des Transportpaletteneinlaufs und des Transportpalettenauslaufs der Kettenräder und Umlenkungen Transportpalettenführungen vorsieht, deren Verlauf einer den Polygoneffekt vermeidenden Ausgleichskurve entspricht. Bei Verwendung des Transportsystems in einer Behandlungsmaschine sind an Abschnitten der Bewegungsbahn der Transportpaletten zwischen den Kettenrädern Arbeitspositionen oder -stationen gebildet, an denen die Transportpaletten mit auf diesen angeordneten Produkten, Gegenständen oder Werkstücken getaktet vorbeibewegt werden. Ein gewisses Problem besteht aber dann, wenn an Arbeitspositionen oder -stationen jeweils mehrere Behandlungen zeitig nacheinander durchgeführt werden müssen und hierbei die betreffende an einer Arbeitsposition oder - station befindliche Transportpalette dort zwischen jeweils zwei Arbeitsschritten um einen Bewegungs- oder Taktschritt exakt weiterbewegt werden muss, wie dies beispielsweise bei der Montage von Mehrfachsteckerleisten oder -klemmen der Fall ist. Bisher erfordert dies zumindest einen nicht unerheblichen Steuerungsaufwand.

Weiterhin ist aus der ebenfalls auf die Anmelderin zurückgehenden Druckschrift DE 10 2015 107 113 A1 ein Transportsystem bekannt geworden, bei dem die Bewegung der Transportpaletten entlang der Bewegungsbahn und insbesondere auch auf den sich zwischen den Kettenrädern erstreckenden Abschnitten der Bewegungsbahn linear proportional zu der Drehbewegung bzw. zum Drehwinkel der Kettenräder ausgebildet ist, und bei dem speziell auf den sich zwischen den Kettenrädern erstreckenden Abschnitten der Umlaufbahn ein Gleichlauf für die Transportpaletten in der Weise erzielt wird, dass jeder Drehschritt der Kettenräder einen gleich großen Bewegungsschritt der Transportpaletten auf den sich zwischen den Kettenrädern erstreckenden Abschnitten ergibt. Bei der DE 10 2015 107 113 A1 sind die Ausgleichskurven, die an den wenigstens zwei Kettenrädern vor dem Transportpaletteneinlauf sowie nach dem Transportpalettenauslauf vorgesehen sind, jeweils vollständig innerhalb eines Winkelbereichs aufgenommen, der sich zwischen dem Transportpaletteneinlauf und einer die Achse des betreffenden Kettenrades einschließenden Ebene erstreckt bzw. zwischen der sich zwischen dem Transportpalettenauslauf und dieser die Achse des betreffenden Kettenrades einschließenden Ebene erstreckt. Dieser Winkelbereich beträgt dabei 360°/n, wobei n die Teilung des Antriebsrades ist. Beispielsweise erhält man im Fall n=8 45° Grad. Die Ausgleichskurven befinden sich damit jeweils vollständig innerhalb des Winkelbereichs der Drehbewegung des betreffenden Kettenrades, so dass diejenigen Abschnitte der Bewegungsbahn der Transportpaletten, die sich zwischen den wenigstens zwei Kettenrädern bzw. den Schnittpunkten der vorstehend genannten Ebenen mit dem jeweiligen Teilungskreis des betreffenden Kettenrades erstreckenden, auf ihrer gesamten Länge für die Anordnung von Arbeits- oder Behandlungspositionen usw. genutzt werden können und hierfür vorzugsweise geradlinig verlaufen.

Unabhängig von den speziellen Abmessungen des Transportsystems gemäß der Druckschrift DE 10 2015 107 113 A1 weist der Verlauf des Abstandes zwischen der jeweiligen Ausgleichskurve und dem Teilkreis des Kettenrades eine S-Form auf. Insbesondere weist der Abstand mit steigendem Winkelabstand zunächst einen steilen Abstieg, anschließend einen abgeflachten Verlauf und anschließend erneut einen steilen Anstieg auf, der dann bei einem Winkelabstand, der dem Teilungsabstand der Ausnehmungen eines Kettenrades bzw. der Kettengliedlänge entspricht, in die lineare Transportpalettenführung übergeht. Dies bedingt eine dynamische Bewegungs- bzw. Lastumkehr des auf einer solcherart ausgebildeten Ausgleichskurve geführten Transportelementes. Insbesondere bei Schaltschritten einer Taktung, die über mehrere Kettenglieder, also einem Weiterschalten des kettenartigen Transportelementes mit einem Bewegungstakt größer als der Teilungsabstand, führen diese dynamischen Bewegungseinflüsse zu einem deutlich erhöhten Verschleiß des Transportelementes insbesondere an den - und Führungselementen. Zudem tritt dieser verstärkte Verschleiß auch bei erhöhten Transport- bzw. Fördergeschwindigkeit der Transportelemente auf.

Ferner ist aus der ebenfalls auf die Anmelderin zurückgehenden Druckschrift DE 10 2018 100 409 A1 ein Transportsystem gemäß Oberbegriff Patentanspruchs 1 bekannt geworden. Aufgabe der Erfindung ist es, ein Transportsystem aufzuzeigen, welches die Nachteile im Stand der Technik vermeidet und insbesondere einen geringeren Verschleiß auch bei erhöhten Transport- bzw. Fördergeschwindigkeiten der Transportelemente ermöglicht. Zur Lösung dieser Aufgabe ist ein Transportelement entsprechend dem Anspruch 1 ausgebildet. Eine Behandlungsmaschine ist Gegenstand des Anspruchs 16.

Die jeweiligen Unteransprüche betreffen dabei besonders vorteilhafte Weiterbildungen der Erfindung.

Gemäß einem wesentlichen Aspekt bezieht sich die vorliegende Erfindung auf ein Transportsystem zur Beförderung von Gegenständen entlang einer Transportstrecke, umfassend wenigstens ein Transportelement, welches aus einer Vielzahl von über Kettengelenke gelenkig miteinander zu einer geschlossenen Schleife verbundenen Kettengliedern besteht und über wenigstens ein Kettenrad in zumindest einer Transportrichtung umlaufend getaktet oder kontinuierlich antreibbar ist, wobei die Kettenglieder als Transportpaletten ausgebildet sind, wobei an dem wenigstens einen Kettenrad in einem vorgegebenen Teilungswinkel Kettenrad-Eingriff- oder Mitnahmebereiche vorgesehen sind, in die an den Kettengelenken der Transportpaletten ausgebildete Führungs- und Lagereinrichtungen bei sich umlaufenden Kettenrad auf jeweils zumindest einem Teilkreis eingreifen, auf dem die Transportpaletten zwischen einem Transportpaletteneinlauf und einem Transportpalettenauslauf radial zu einer jeweiligen Achse des wenigstens einen Kettenrades geführt sind, wobei weiterhin Transportpalettenführungen zum linearen Führen der Führungs- und Lagereinrichtungen der Transportpaletten zwischen den mittels des wenigstens einen Kettenrades ausgebildeten radialen Umlenkungen zu einer geschlossenen Bewegungsbahn vorgesehen sind, wobei bezogen auf die Transportrichtung jeweils zwischen einem Transportpaletteneinlauf und der entsprechenden linearen Führung mittels der Transportpalettenführungen und zwischen einem Transportpalettenauslauf und der entsprechenden linearen Führung mittels der Transportpalettenführungen jeweils eine Ausgleichskurve vorgesehen ist, entlang der die Führungs- und Lagereinrichtungen der Transportpaletten für einen Polygonausgleich geführt sind, und wobei die Ausgleichskurven zumindest abschnittweise als Klothoide oder im Wesentlichen als Klothoide ausgebildet sind. Weiterhin kann die Ausgleichskurve schon deutlich vor dem Kettenrad beginnen, wodurch eine längere Umlenkphase erreicht wird. Durch diese längere Umlenkphase können die bei der Umlenkung auftretenden Kreiskräfte (Zentripetalkräfte) auf die Transportpalette verringert werden.

Gemäß einer vorteilhaften Ausführungsvariante kann dabei vorgesehen sein, dass sich die Ausgleichskurven in Transportrichtung gesehen jeweils vollständig als Klothoide zwischen dem entsprechenden Transportpaletteneinlauf und einem zugehörigen Transportpalettenauslauf der linearen Führung mittels der Transportpalettenführungen und zwischen dem Transportpalettenauslauf und einem zugehörigen Transportpaletteneinlauf der linearen Führung mittels der Transportpalettenführungen erstrecken.

Gemäß einer weiteren vorteilhaften Ausführungsvariante kann dabei vorgesehen sein, dass sich die Ausgleichskurven jeweils über einen Winkelbereich erstrecken, welcher frei gewählt werden kann, wobei das Intervall in welchem dieser frei gewählt werden kann vom Teilungswinkels der Kettenrad-Eingriff-oder Mitnahmebereiche abhängig ist.

Gemäß einer nochmals weiteren vorteilhaften Ausführungsvariante kann dabei vorgesehen sein, dass der Teilungswinkel der Kettenrad-Eingriff-oder Mitnahmebereiche zwischen 15° Grad und 45° Grad, vorzugsweise 15° Grad oder 45° Grad beträgt, so dass das entsprechende Kettenrad zwischen 8-teilig und 24-teilig, vorzugsweise 8-teilig oder 24-teilig, ausgebildet ist.

Gemäß einer nochmals weiteren vorteilhaften Ausführungsvariante kann dabei vorgesehen sein, dass zumindest eine Ausgleichskurve einteilig, insbesondere einstückig, mit dem Teilkreis ausgebildet ist, auf dem die Transportpaletten zwischen dem Transportpaletteneinlauf und dem Transportpalettenauslauf radial zu einer jeweiligen Achse geführt sind, indem die zumindest eine Ausgleichskurve und der Teilkreis als einteilige Umlenkeinrichtung, insbesondere in Form einer Umlenkkurve, ausgebildet sind.

Gemäß einer nochmals weiteren vorteilhaften Ausführungsvariante kann dabei vorgesehen sein, dass die Fördergeschwindigkeit des Transportelementes im kontinuierlichen Betrieb zwischen 2 m/s und 3 m/s, vorzugsweise im Wesentlichen 2,5 m/s, beträgt.

Gemäß einer nochmals weiteren vorteilhaften Ausführungsvariante kann dabei vorgesehen sein, dass bezogen auf die Transportrichtung die auf den Transportpalettenauslauf des jeweiligen Kettenrades und/oder Umlenkeinrichtung folgende Ausgleichskurve einen derartigen Verlauf aufweist, dass ein Abstand zwischen dieser Ausgleichskurve und dem Teilkreis in Drehrichtung des Kettenrades mit zunehmendem Winkelabstand von dem Transportpalettenauslauf einen klothoiden-förmigen Verlauf aufweist.

Gemäß einer nochmals weiteren vorteilhaften Ausführungsvariante kann dabei vorgesehen sein, dass bezogen auf die Transportrichtung die dem Transportpaletteneinlauf des jeweiligen Kettenrades und/oder Umlenkeinrichtung vorausgehende Ausgleichskurve einen derartigen Verlauf aufweist, dass der Abstand zwischen dieser Ausgleichskurve und dem Teilkreis entgegen der Drehrichtung des Kettenrades mit zunehmendem Winkelabstand von dem Transportpaletteneinlauf einen klothoiden-förmigen Verlauf aufweist.

Erfindungsgemäß ist dabei vorgesehen, dass die Klothoidenform der zumindest einen Ausgleichskurve (24, 24a) durch folgende Formeln und kartesische Koordinaten beschrieben ist, wobei $\gamma$ der Winkel ist, unter dem die Klothoide in den Kreis übergeht, und R der Radius des Krümmungskreises am Ende der Klothoide, welcher im konkreten Anwendungsfall der Radius des Kettenrades ist. Dadurch ist die Klothoide, beginnend im Punkt (0,0) wie folgt mathematisch beschrieben

$$x = \int_0^L \cos((f(s))^2)\, ds$$

$$y = \int_0^L \sin((f(s))^2)\, ds$$

wobei L die Länge der Klothoide und f(s) eine Funktion ist, die im Wesentlichen eine quadratische Funktion der Form $s \mapsto (as)^2$ ist, wobei der Klothoidenparameter a sich aus $\gamma$ und R gemäß folgender Formeln

$$\Lambda = \gamma \frac{\pi}{180°} \cdot 2R$$

$$a = \sqrt{\frac{1}{2R \cdot \Lambda}}$$

ergibt, und wobei der Winkel $\gamma$ in Grad angegeben ist.

Gemäß einer nochmals weiteren vorteilhaften Ausführungsvariante kann dabei vorgesehen sein, dass die quadratische Funktion $s \mapsto (as)^2$ im Argument der Sinus und Cosinus-Funktion in obiger Formel durch eine allgemeinere im Funktion $s \mapsto f(s)$, welche im Wesentlichen ähnlich zu einer quadratischen Funktion ist, ersetzt wird.

Gemäß einer nochmals weiteren vorteilhaften Ausführungsvariante kann dabei vorgesehen sein, dass der Tangentenwinkel $\gamma$ im Bereich zwischen 360/2n und 90-360/2n gewählt wird, wobei n die Teilung des Kettenrades ist, insbesondere zwischen 15° und 75° für n=24, besonders bevorzugt zu etwa 20°.

Gemäß einer nochmals weiteren vorteilhaften Ausführungsvariante kann dabei vorgesehen sein, dass die Transportpaletten zumindest abschnittsweise entlang der Transportstrecke beidseitig mittels einer ersten und zweiten Führungseinrichtung geführt sind, bei dem ein Kettengelenk jeweils eine zwischen der ersten und zweiten Führungseinrichtung verlaufende Gelenkachse aufweist, die an einem ersten freien Ende mit einer ersten Führungs- und Lagereinrichtung in der ersten Führungseinrichtung und an einem zweiten freien Ende mit einer zweiten Führungs- und Lagereinrichtung in der zweiten Führungseinrichtung geführt ist, wobei die erste und zweite Führungs- und Lagereinrichtung jeweils wenigstens ein erstes und zweites Rollenlager umfassen, die zwischen einer ersten und zweiten, einander gegenüberliegenden und parallel zur Gelenkachse verlaufenden Führungsfläche der jeweiligen Führungseinrichtung geführt sind, wobei das erste Rollenlager in einem ersten Anlageabschnitt der ersten Führungsfläche und das zweite Rollenlager in einem zweiten Anlageabschnitt der zweiten Führungsfläche anliegen und zueinander vorgespannt geführt sind, wobei der erste und zweite Anlageabschnitt entlang der Gelenkachse zueinander versetzt und einander gegenüberliegend sind. Besonders vorteilhaft wird durch das an gegenüberliegenden Seiten entlang der Achse versetzte Verspannen des jeweiligen ersten und zweiten Rollenlagers der ersten und zweiten Führungseinrichtung zueinander eine hochpräzise und nahezu toleranzfreie Führung der entsprechenden Transportpalette in Transportrichtung erreicht.

Gemäß einer weiteren vorteilhaften Ausführungsvariante ist dabei vorgesehen, dass die beiden freien Enden der Gelenkachse in der ersten und zweiten Führungseinrichtung in zwei gegenüberliegend und parallel zur Transportrichtung orientierte Führungsebenen geführt sind.

Gemäß einer weiteren vorteilhaften Ausführungsvariante ist dabei vorgesehen, dass das erste und zweite Rollenlager der ersten Führungs- und Lagereinrichtung um die Gelenkachse drehbar und unmittelbar benachbart an dieser im Bereich des ersten freien Endes vorgesehen sind.

Gemäß einer weiteren vorteilhaften Ausführungsvariante ist dabei vorgesehen, dass das erste und zweite Rollenlager der zweiten Führungs- und Lagereinrichtung um die Gelenkachse drehbar und unmittelbar benachbart an dieser im Bereich des zweiten freien Endes vorgesehen sind.

Gemäß einer weiteren vorteilhaften Ausführungsvariante ist dabei vorgesehen, dass das erste Rollenlager der ersten Führungs- und Lagereinrichtung an dem ersten Anlageabschnitt der ersten Führungsfläche anliegend gegen das an dem zweiten Anlageabschnitt der zweiten Führungsfläche anliegende zweite Rollenlager in der ersten Führungseinrichtung vorgespannt geführt ist und das erste Rollenlager der zweiten Führungs- und Lagereinrichtung an dem ersten Anlageabschnitt der ersten Führungsfläche anliegend gegen das an dem zweiten Anlageabschnitt der zweiten Führungsfläche anliegende zweite Rollenlager in der zweiten Führungseinrichtung vorgespannt geführt ist.

Gemäß einer weiteren vorteilhaften Ausführungsvariante ist dabei vorgesehen, dass das erste und zweite Rollenlager der ersten Führungs- und Lagereinrichtung vorgespannt gegenüber dem ersten und zweiten Rollenlager der zweiten Führungs- und Lagereinrichtung geführt sind.

Gemäß einer weiteren vorteilhaften Ausführungsvariante ist dabei vorgesehen, dass die Klothoide der jeweiligen Ausgleichkurve derart eingestellt ist, dass die Transportpaletten in dem entsprechenden geradlinigen Abschnitt einen Gleichlauf mit dem zumindest einem Kettenrad ausbilden, so dass die Fördergeschwindigkeit der Transportpaletten in dem geradlinigen Abschnitt proportional zur Winkelgeschwindigkeit des zumindest einen Kettenrades ausgebildet ist.

Gemäß einer weiteren vorteilhaften Ausführungsvariante ist dabei vorgesehen, dass der Transportpaletteneinlauf des Abschnittes sowie der Transportpalettenauslauf des Abschnittes gegenüber einer die Achse einschließenden horizontalen Ebene in Richtung einer Mittelebene versetzt ist und sich die entsprechende Ausgleichskurve bis an den in Richtung der Mittelebene versetzten Transportpaletteneinlauf und Transportpalettenauslauf erstreckt.

Gemäß einer weiteren vorteilhaften Ausführungsvariante ist dabei vorgesehen, dass der Transportpalettenauslauf des Abschnittes sowie der Transportpaletteneinlauf des Abschnittes gegenüber einer die Achse einschließenden horizontalen Ebene in Richtung einer Mittelebene versetzt ist und sich die entsprechende Ausgleichskurve bis an den in Richtung der Mittelebene versetzten Transportpaletteneinlauf und Transportpalettenauslauf erstreckt.

"Teilkreis des Kettenrades" bedeutet im Sinne der Erfindung diejenige Kreisbahn um die Achse des Kettenrades, auf der sich die Kettenrad-Eingriff- oder Mitnahmebereiche bewegen, in die die Mitnahme- und Führungselemente des kettenartigen Transportelementes eingreifen und die beispielsweise von am Umfang des Kettenrades offenen Ausnehmungen zwischen Kettenradzähnen gebildet sind.

"Behandlungsmaschinen" im Sinne der vorliegenden Erfindung sind allgemein Maschinen oder Vorrichtungen zum Behandeln von Produkten oder Gegenständen in unterschiedlichster Weise, insbesondere Fertigungs- und/oder Montagemaschinen oder Fertigungs- und/oder Montagevorrichtungen zum maschinellen Bearbeiten und/oder Verarbeiten und/oder Montieren von Bauteilen oder Baugruppen auch in mehreren zeitlich aufeinander folgenden Arbeitsschritten an jeweils einer und/oder an unterschiedlichen Arbeitspositionen oder -stationen.

"Behandlung" im Sinne der Erfindung bedeutet jegliche Behandlung von Produkten oder Gegenständen im weitesten Sinne, insbesondere Verarbeitung und/oder Bearbeitung und/oder Montage usw.

"Getaktete Bewegung" im Sinne der Erfindung bedeutet eine Bewegung in Schritten mit jeweils anschließender Stillstandsphase, d.h. in Bewegungstakten, von denen jeder eine Bewegungsphase und eine Stillstandsphase aufweist.

"Transportpaletteneinlauf des Kettenrades" ist im Sinne der Erfindung diejenige Winkelstellung der kreisförmigen Bewegungsbahn oder des Teilkreises der Mitnahmebereiche des Kettenrades, an der (Winkelstellung) die Mitnahme- und Führungselemente des kettenartigen Transportelementes erstmals vollständig in jeweils einem Kettenrad-Eingriff-oder Mitnahmebereich des Kettenrades aufgenommen sind bzw. erstmals mit einem Kettenrad-Eingriff- oder Mitnahmebereich vollständig formschlüssig in Eingriff kommen. "Transportpalettenauslauf des Kettenrades" ist im Sinne der Erfindung derjenige Punkt der kreisförmigen Bewegungsbahn der Kettenrad-Eingriff- oder Mitnahmebereiche des Kettenrades, an dem sich die Mitnahme- und Führungselemente des kettenartigen Transportelementes jeweils wieder aus den Kettenrad-Eingriff- oder Mitnahmebereichen herausbewegen.

"Polygonausgleich" bedeutet im Sinne der Erfindung insbesondere auch einen Ausgleich oder eine Kompensation der durch den Polygoneffekt an den Kettenrädern bedingten sich ändernden Transportgeschwindigkeit oder des sich ändernden Transportweges des Transportelementes in der Weise, dass die Transportgeschwindigkeit oder der Transportweg einer getakteten Bewegung des Transportelementes zumindest an Abschnitten der linearen Führung des Transportsystems konstant oder im Wesentlichen konstant ist, an denen auch Arbeitspositionen oder -stationen vorgesehen sind.

Der Ausdruck "im Wesentlichen" bzw. "etwa" bedeutet im Sinne der Erfindung Abweichungen von jeweils exakten Werten um +/- 10%, bevorzugt um +/- 5% und/oder Abweichungen in Form von für die Funktion unbedeutenden Änderungen.

Die Erfindung wird im Folgenden anhand der Figuren an einem Ausführungsbeispiel näher erläutert. Es zeigen:

Fig. 1　　　　in vereinfachter perspektivischer Darstellung das Transportelement gemäß der Erfindung zur Verwendung bei einer Montage- und/oder Fertigungsmaschine;

Fig. 2 und 3　　jeweils in sehr vereinfachter schematischer Darstellung und in Draufsicht das Transportelement der Fig. 1;

Fig. 4a　　　　in vereinfachter perspektivischer Darstellung eine beispielhafte weitere Ausführungsvariante eines erfindungsgemäßen Transportsystems;

Fig. 4b　　　　in teilweise dargestellter Seitenansicht der Bereich des Kettenrades des erfindungsgemäßen Transportsystems gemäß Figur 4a;

Fig. 4c　　　　in teilweise dargestellter Seitenansicht der Bereich der Umlenkung des erfindungsgemäßen Transportsystems gemäß Figur 4a;

Fig. 5　　　　in perspektivischer Darstellung zwei gelenkig miteinander verbundene Transportpaletten des Transportsystems;

Fig. 6　　　　einen Vertikalschnitt des Transportsystems auf einer Teillänge zwischen den Kettenrädern des Transportsystems;

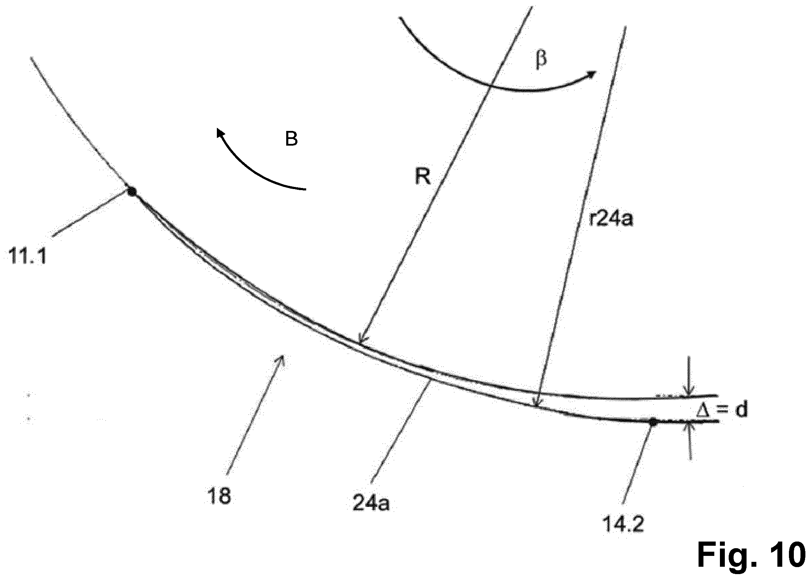

Fig. 7-10　　jeweils den Verlauf von Ausgleichskurven am Ein- und Auslauf der Kettenräder, und zwar im Vergleich zu einer Kreisbahn um die Achse des jeweiligen Kettenrades;

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

Zudem sind zum besseren Verständnis in den Figuren jeweils senkrecht zueinander verlaufende Koordinaten- oder Raumachsen X, Y und Z angegeben, von denen bei der dargestellten Ausführungsform die X-Achse und Y-Achse eine horizontale oder im Wesentlichen horizontale XY-Ebene definieren und von denen die Z-Achse senkrecht zu dieser XY-Ebene orientiert ist.

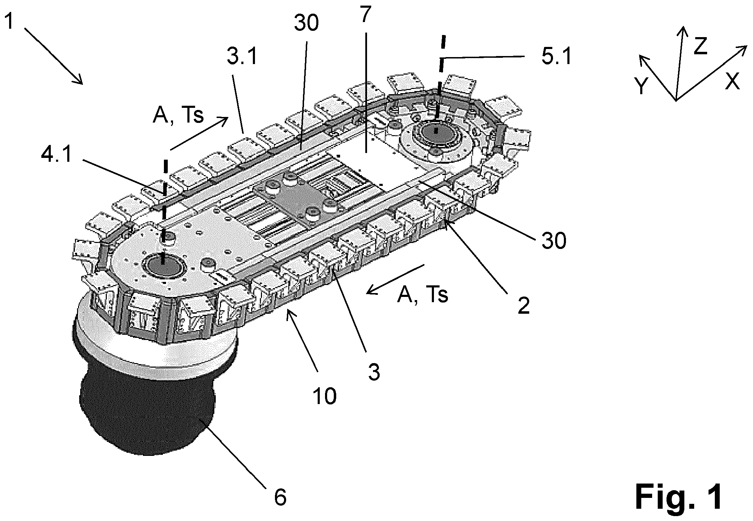

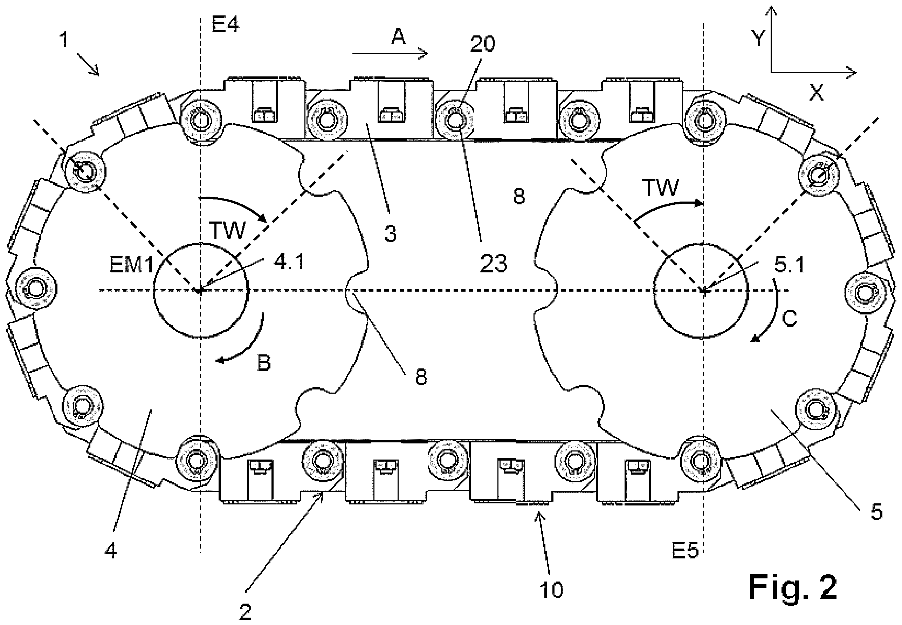

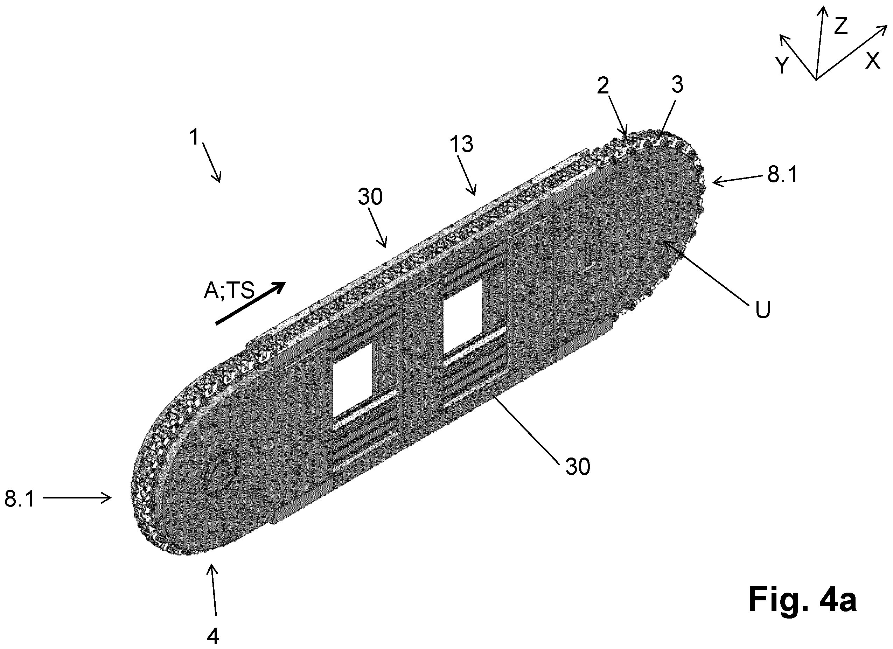

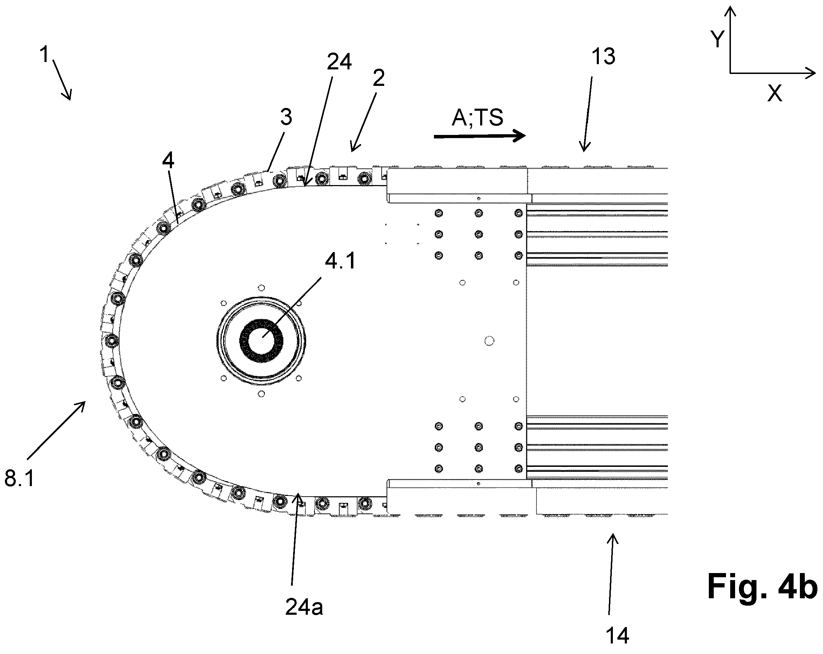

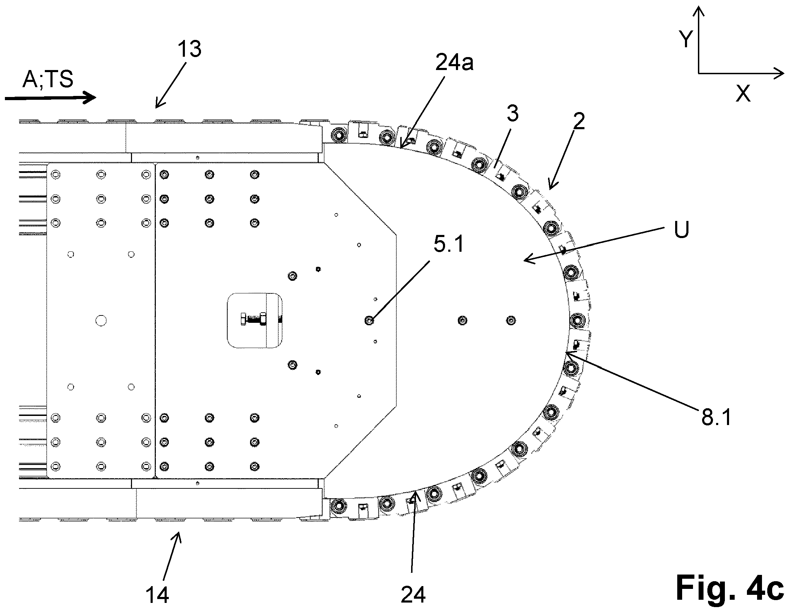

In den Figuren ist mit 1 ein Transportsystem zur Beförderung von Gegenständen entlang einer Transportstrecke TS bezeichnet. Das Transportsystem 1 umfasst wenigstens ein scharnierband- oder kettenartiges Transportelement 2 (Kettenstrang) mit einer Vielzahl von Transportpaletten 3, die über Kettengelenke 20 kettengliederartig und gelenkig miteinander verbunden sind, und zwar zu dem eine geschlossene Schlaufe bildenden Transportelement 2, welches über beispielsweise zwei in horizontaler Richtung, d.h. in Richtung der X-Achse voneinander beabstandeten Kettenräder 4 und 5 geführt ist, wie dies in den Figuren 1 und 2 nähergehend dargestellt ist. Im vorliegenden Ausführungsbeispiel der Figuren 1 und 2 wird dabei davon ausgegangen, dass sich die Schlaufe des Transportelementes 2 zwischen den beiden Kettenrädern 4 und 5 ausbildet. Wie insbesondere aus dem Ausführungsbeispiel der Figuren 4a bis 4c ersichtliche ist, ist es jedoch auch denkbar, dass eines der beiden Kettenräder 4, 5 lediglich als Umlenkeinrichtung U in Form beispielsweise einer Umlenkrolle oder Umlenkkurve ausgebildet ist, an der das Transportelement 2 umgelenkt werden kann. In anderen Worten kann also das Transportelement 3 auch die geschlossene Schleife zwischen nur einem Kettenrad 4, 5 und einer Umlenkeinrichtung U ausbilden. Wesentlich dabei ist jedoch, dass das Transportsystem 1 wenigstens ein angetriebenes Kettenrad 4, 5 aufweist.

Vorteilhaft ist wenigstens eines der beiden Kettenrädern 4 und 5, vorzugsweise das Kettenrad 4 unmittelbar, d.h. getriebelos durch einen Elektromotor 6, bevorzugt durch einen Torquemotor, in zumindest einer Transportrichtung A umlaufend antreibbar. In einer alternativen Ausführungsvariante sind dabei beide Kettenräder 4 und 5 unmittelbar, d.h. getriebelos durch einen Elektromotor 6, bevorzugt durch einen Torquemotor, in zumindest einer Transportrichtung A umlaufend antreibbar. Die beiden Kettenräder 4 und 5 sind mit ihren Achsen 4.1 bzw. 5.1 in vertikaler Richtung oder im Wesentlichen in vertikaler Richtung, d.h. parallel zur Z-Achse orientiert in einem Maschinenrahmen 7 gelagert.

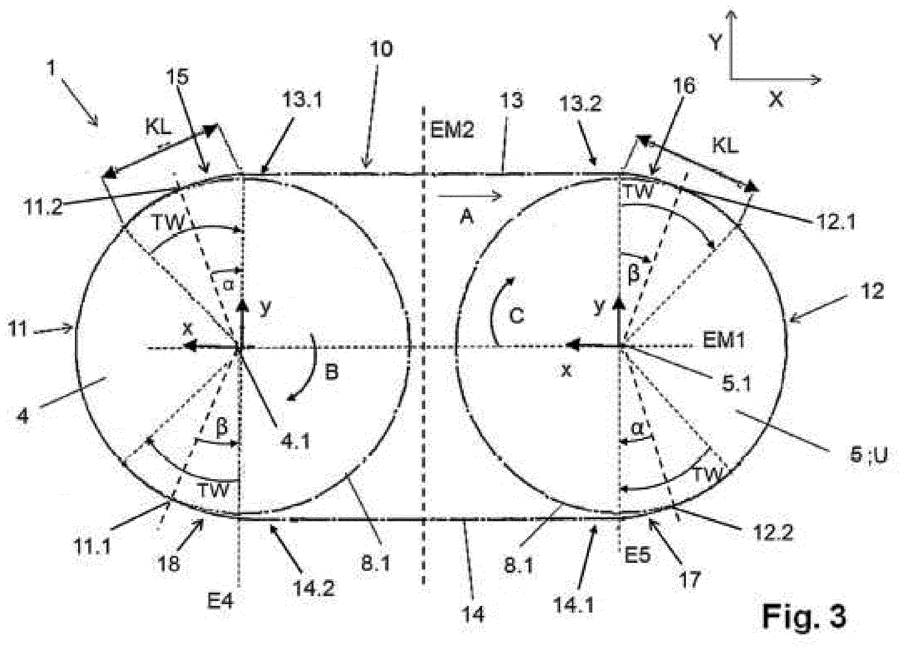

Die von dem Transportelement 2 gebildete Schlaufe ist somit in einer horizontalen oder im Wesentlichen horizontalen Ebene, d.h. in der XY-Ebene angeordnet. Die Transportpaletten 3 sind jeweils mit einer Aufnahme 3.11 versehen, und zwar für die Aufnahme von Gegenständen (z.B. Werkstücke oder andere Produkte), die mit dem umlaufenden Transportelement 2 in Transportrichtung A bewegt werden. Das Transportsystem 1 ist bei der dargestellten Ausführungsform der Figur 3 spiegelsymmetrisch zu einer Mittelebene EM1 ausgebildet, die die beiden Achsen 4.1 und 5.1 einschließt sowie auch senkrecht zu der XY-Ebene orientiert ist.

Außerhalb zumindest des Kettenrades 4, also in dem Transportabschnitt der Transportstrecke TS, in dem die Transportpaletten 3 nicht in Eingriff mit dem Kettenrad 4 stehen, sind die Transportpaletten 3 jeweils beidseitig mittels den an dem Maschinenrahmen 13 vorgesehenen Transportpalettenführungen 30, 31, insbesondere einer ersten und zweiten Transportpalettenführung 30, 31, geführt.

In der Ausführungsvariante der Figuren 1 und 2 erstrecken sich die an dem Maschinenrahmen angeordneten Transportpalettenführungen 30, 31 zumindest zwischen dem ersten und zweiten Kettenrad 4 und 5 und führen das Transportelement 2, insbesondere die einzelnen Transportpaletten 3 des Transportelementes 2, zumindest in diesem Transportabschnitt entlang der Transportstrecke TS - also in dem Transportabschnitt der Transportstrecke TS, in dem die Transportpaletten 3 außer Eingriff mit dem ersten und zweiten Kettenrad 4 bzw. 5 stehen. Die einzelnen Transportpaletten 3 sind somit zumindest abschnittsweise entlang der Transportstrecke TS beidseitig mittels der ersten und zweiten Führungseinrichtung 30 und 31 geführt.

Die von dem Transportelement 2 gebildete Schlaufe ist dabei in der Ausführungsvariante der Figuren 1 und 2 in einer horizontalen oder im Wesentlichen horizontalen Ebene, d.h. in der XY-Ebene angeordnet. Die räumliche Ausrichtung der von dem Transportelement 2 gebildeten Schlaufe ist dabei auf keine der beispielhaft gezeigten Ausführungsvarianten festgelegt. Vielmehr ist das Transportelement 2 in jeder beliebigen Ausrichtung im dreidimensionalen Raum anordenbar.

Die Transportpaletten 3 bilden an ihren jeweiligen Oberseiten 3.1 eine bahnartige Transport- oder Haltefläche TF aus, an der beispielsweise jeweils eine Aufnahme 3.11, gezeigt in Figur 1, vorgesehen ist und zwar für die Aufnahme von Gegenständen (z.B. Werkstücke oder andere Produkte), die mit dem umlaufenden Transportelement 2 in Transportrichtung A bewegt werden.

Bei der dargestellten Ausführungsform wird das Kettenrad 4 durch den Antrieb 6 bei der für die Fig. 2 und 3 gewählten Darstellung im Gegenuhrzeigersinn entsprechend dem Pfeil B angetrieben. Dementsprechend läuft auch das frei drehbar am Maschinenrahmen 7 gelagerte und als Umlenkung dienende Kettenrad 5 im Gegenuhrzeigersinn entsprechend dem Pfeil C um.

Bei der dargestellten Ausführungsform der Figuren 1 und 2 sind die beiden Kettenräder 4 und 5 identisch ausgebildet, und zwar jeweils als achtteilige Kettenräder, so dass sie jeweils acht Kettenrad-Eingriff- oder Mitnahmebereiche oder Aufnahmen 8 aufweisen, die als Mitnehmerbereiche für die Kettenglieder des Transportelementes 2 wirken und in vorzugsweise gleichmäßigen Winkelabständen, also Teilungswinkel TW auf einer Kreisbahn oder Teilungskreis 8.1 um die Achse 4.1 bzw. 5.1 des betreffenden Kettenrades 4 bzw. 5 umlaufen. Die Ausführungsvariante der Figuren 4a bis 4a weist dabei ein 24-teiliges Kettenrad 4 auf, bei dem die Kettenrad-Eingriff- oder Mitnahmebereiche oder Aufnahmen 8 in einem Teilungswinkel von 15° Grad benachbart zueinander vorgesehen sind.

Die zum Umfang des jeweiligen Kettenrades 4 bzw. 5 hin offenen taschenartigen Ausnehmungen 8 bilden zwischen sich jeweils einen "Kettenradzahn" und besitzen den Teilungswinkel TW der der Kettengliedlänge KL der Kettenglieder des Transportelementes 2 entspricht, d.h. die Länge des Kettengliedes jeder Transportpalette bzw. des Achsabstandes zwischen zwei in Transportrichtung A aufeinander folgenden Gelenkachsen GAS ist Länge der Basisseite eines gleichschenkligen Dreiecks mit Scheitelwinkel TW und Scheitellänge R, wobei R der Radius des Kettenrades, d.h. der Abstand des Mittelpunkt des Kettenrades zum Mittelpunkt der Rollenlager bzw. der Gelenkachsen GAS ist. Vorzugsweise stellt sich bei identisch ausgebildeten Kettenrädern 4, 5 mit jeweils acht Kettenrad- Eingriffs oder Mitnahmebereiche 8 in der Ausführungsvariante der Figuren 1 und 2 zwischen entsprechend benachbart vorgesehenen Eingriffs- oder Mitnahmebereiche 8 ein Teilungswinkel TW von 45° Grad und in der Ausführungsvariante der Figuren 4a bis 4a von eben 15° Grad ein.

Die Eingriff- oder Mitnahmebereiche 8 der Kettenräder 4, 5 greifen dabei drehpositionsabhängig in eine an den jeweiligen Gelenkachsen GAS ausgebildete erste und zweite Führungs- und Lagereinrichtung 32, 33 ein, die vorzugsweise an den jeweiligen freien Enden GAS1, GAS2 einer Gelenkachse GAS des Kettengelenkes 20 der jeweiligen Transportpaletten 3 vorgesehen sind. In anderen Worten greifen also die ersten und zweiten Führungs- und Lagereinrichtungen 32, 33, die an den freien Enden der jeweiligen Gelenkachsen GAS des Kettengelenkes 4 vorgesehen sind, drehpositionsabhängig formschlüssig in die Eingriff- oder Mitnahmebereiche 8 der beiden Kettenräder 4 und 5 ein, so dass mittels des wenigstens einen angetrieben Kettenrades 4 eine Antriebsbewegung in Transportrichtung A auf das Transportelement 2 übertragbar ist. Dabei kann die jeweilige Gelenkachse GAS des entsprechenden Kettengelenkes 20 als einteilige insbesondere einstückige Gelenkstange ausgebildet sein, die sich zwischen ihrem ersten und zweiten freien Ende GAS1, GAS2 derart erstreckt, dass das Kettengelenk 20 jeweils eine zwischen der ersten und zweiten Führungseinrichtung 30, 31 verlaufende Gelenkachse GAS aufweist. Die Gelenkachse GAS bildet dabei einen Gelenkbolzen des Kettengelenkes 20 zwischen zwei benachbarten Transportpaletten 3 aus.

Bei eingeschaltetem Antrieb 6 bewegen sich die Transportpaletten 3 somit in Transportrichtung A auf einer in den Figuren allgemein mit 10 bezeichneten, der geschlossenen Schlaufe des Transportelementes 2 entsprechenden Bewegungsbahn, die zunächst zwei kreisbogenförmige Abschnitte 11 und 12 aufweist, von denen der Abschnitt 11 zwischen dem Transportpaletteneinlauf 11.1 und dem Transportpalettenauslauf 11.2 des Kettenrades 11 und der Abschnitt 12 zwischen dem Transportpaletteneinlauf 12.1 und dem Transportpalettenauslauf 12.2 des Kettenrades 5 gebildet ist. Dies ist in Figur 3 abstrakt für unterschiedliche Kettenradteilungen, ob 8-teiliges oder 24-teiliges Kettenrad 4, 5, da rgestellt.

Wie ebenfalls insbesondere in Figur 3 gezeigt, umfasst die Bewegungsbahn 10 weiterhin zwei geradlinige Abschnitte 13 und 14, die sich jeweils in der X-Achse zwischen den beiden Kettenrädern 4 und 5 bzw. dem Kettenrad 4 und der Umlenkeinrichtung U erstrecken, aber in Richtung der Y-Achse einen Abstand voneinander aufweisen, der insbesondere größer ist als der doppelte Radius des Teilkreises 8.1, d.h. jeder Abschnitt 13 und 14 besitzt in Richtung der Y-Achse von einer die Achsen 4.1 und 5.1 einschließenden XZ-Ebene bzw. Mittelebene EM1 einen Abstand, der um den Versatz d größer ist als der Radius des jeweiligen Teilkreises 8.1. Außerdem können die Ausgleichskurven 24, 24a so realisiert sein, dass diese schon, im Sinne der Bewegungsrichtung in Figur 3, deutlich vor dem Schnittpunkt der Ebene E4 bzw. E5 und dem jeweiligen geradlinigen Abschnitt 13, 14 beginnen. In anderen Worten kann die Länge der geradlinigen Abschnitte 13, 14 kürzer sein als der Abstand der Mittelpunkte der beiden Kettenräder.

Der Transportpaletteneinlauf 13.1 des Abschnittes 13 sowie der Transportpalettenauslauf 14.2 des Abschnittes 14 befinden sich gegenüber einer die Achse 4.1 einschließenden horizontalen YZ-Ebene, die mit E4 bezeichnet ist, in Richtung einer Mittelebene EM2 versetzt Analog finden sich der Transportpalettenauslauf 13.2 des Abschnittes 13 und der Transportpaletteneinlauf 14.1 des Abschnittes 14 gegenüber einer die Achse 5.1 einschließenden YZ-Ebene, die mit E5 bezeichnet ist, ebenfalls in Richtung der Mittelebne EM2 versetzt. Im Bereich dieser die Achse 4.1 bzw. 5.1 einschließenden Ebenen E4 und E5 besteht auch der Versatz d.

Gemäß einer weiteren vorteilhaften Ausführungsvariante ist dabei vorgesehen, dass der Transportpaletteneinlauf 13.1 des Abschnittes 13 sowie der Transportpalettenauslauf 14.2 des Abschnittes 14 gegenüber einer die Achse 4.1 einschließenden horizontalen Ebene E4 in Richtung einer Mittelebene EM2 versetzt ist und sich die entsprechende Ausgleichskurve 24, 24a bis an den in Richtung der Mittelebene EM2 versetzten Transportpaletteneinlauf 13.1 und Transportpalettenauslauf 14.2 erstreckt.

Gemäß einer weiteren vorteilhaften Ausführungsvariante ist dabei vorgesehen, dass der Transportpalettenauslauf 13.2 des Abschnittes 14 sowie der Transportpaletteneinlauf 14.1 des Abschnittes 14 gegenüber einer die Achse 5.1 einschließenden horizontalen Ebene E5 in Richtung einer Mittelebene EM2 versetzt ist und sich die entsprechende Ausgleichskurve 24, 24a bis an den in Richtung der Mittelebene EM2 versetzten Transportpaletteneinlauf 14.1 und Transportpalettenauslauf 13.2 erstreckt.

Dabei kann auch vorgesehen sein, dass die Klothoide der jeweiligen Ausgleichkurve 24, 24a derart eingestellt ist, dass die Transportpaletten 3 in dem entsprechenden geradlinigen Abschnitt 13, 14 einen Gleichlauf mit dem zumindest einem Kettenrad 4, 5 ausbilden, so dass die Fördergeschwindigkeit der Transportpaletten 3 in den Abschnitt 13, 14 proportional zur Winkelgeschwindigkeit des zumindest einen Kettenrades 4, 5 ausgebildet ist.

Die einzelnen Transportpaletten 3 sind mithin zumindest in dem jeweils geradlinigen Abschnitt 13, 14 entlang der Transportstrecke TS beidseitig mittels der ersten und zweiten Transportpalettenführung 30 und 31 geführt.

Transportpaletteneinlauf 11.1 bzw. 12.1 und Transportpalettenauslauf 11.2 bzw. 12.2 bedeutet dabei diejenige Winkelposition der Drehbewegung des betreffenden Kettenrades 4 bzw. 5, an der die jeweilige Transportpalette 3 von dem Kettenrad 4 bzw. 5 voll formschlüssig erfasst bzw. von dem Formschluss mit dem Kettenrad 4 bzw. 5 wieder frei kommt.

Bezogen auf den Teilungswinkel TW eines beispielsweise achteiligen Kettenrades 4, 5 von dann 45° Grad, liegt der jeweilige Transportpaletteneinlauf 11.1, 12.1 um einen Winkelbereich $\alpha$, $\beta$ von mindestens TW/2 versetzt in jeweiliger Drehrichtung B, C des entsprechenden Kettenrades 4, 5, also um einen Winkelbereich o, $\beta$, der größer als der halbe Teilwinkel TW ist.

Die Bewegungsbahn 10 umfasst weiterhin Abschnitte 15 - 18, von denen sich der Abschnitt 15 zwischen dem Transportpalettenauslauf 11.2 und dem Transportpaletteneinlauf 13.1, der Abschnitt 16 zwischen dem Transportpalettenauslauf 13.2 und dem Transportpaletteneinlauf 12.1, der Abschnitt 17 zwischen dem Transportpalettenauslauf 12.2 und dem Transportpaletteneinlauf 14.1 und der Abschnitt 18 zwischen dem Transportpalettenauslauf 14.2 und dem Transportpaletteneinlauf 11.1 erstrecken. Mithin erstrecken sich die Abschnitte 15 -18 jeweils über den Winkelbereich $\alpha$, $\beta$ von beispielsweise 22,5° Grad oder mehr. Darüber hinaus können sich die Ausgleichskurven 24, 24a auch noch über die Ebenen E4 und E5 hinaus erstrecken.

Dabei kann vorgesehen sein, dass sich die Ausgleichskurven 24, 24a jeweils über einen Winkelbereich $\alpha$, $\beta$ erstrecken, welcher frei gewählt werden kann, wobei das Intervall in welchem dieser frei gewählt werden kann vom Teilungswinkels TW der Kettenrad-Eingriff-oder Mitnahmebereiche 8 abhängig ist.

Der Winkelbereich $\alpha$, $\beta$ kann dabei beliebig gewählt werden. Er sollte mindestens dem halben Teilungswinkel TW entsprechen, und sollte maximal 90°-TW/2 sein. Insbesondere ist der Winkel, über den sich die Klothoide oder die im Wesentlichen klothoidenförmige Kurve erstreckt keine Funktion des Teilungswinkels TW, d.h. es gibt keinen funktionalen Zusammenhang zwischen beiden Winkeln.

Die Abschnitte 15-18 sind zumindest hinsichtlich der horizontalen Führung (in der XY-Ebene) oder der radialen Führung (bezogen auf die jeweilige Achs 4.1 und 5.1) der Transportpaletten 3 in der nachstehend noch näher beschriebenen Weise so gestaltet, dass beim Umlauf des kettenartigen Transportelementes 2 ein vollständiger Ausgleich des Polygoneffektes (Polygonausgleich) erreicht wird. Insbesondere ist jedem der Abschnitte 15 - 18 jeweils eine Ausgleichskurve 24, 24a zugeordnet, bzw. in dem jedem der Abschnitte 15 - 18 eine Ausgleichskurve 24, 24a in der nachstehend noch näher beschrieben Art und Weise ausgebildet. Insbesondere erstreckt sich die jeweilige Ausgleichskurve 24, 24a über den jeweiligen Abschnitt 15 - 18.

Die Abschnitte 15 und 17 sind hinsichtlich des Verlaufs der Transportpalettenführung 30, 31 für die Transportpaletten 3 grundsätzlich identisch ausgebildet und können über die Ebene E4 oder E5 hinaus reichen. Mehr im Detail sind aber der Abschnitt 16 und dessen Transportpalettenführung 30, 31 in Bezug auf die die Achsen 4.1 und 5.1 einschließende Mittelebene EM1 spiegelsymmetrisch zum Abschnitt 17 und dessen Transportpalettenführung 30, 31 ausgeführt. Ebenso sind der Abschnitt 18 und dessen Transportpalettenführung 30, 31 in Bezug auf die Mittelebene EM1 spiegelsymmetrisch zum Abschnitt 15 und dessen Transportpalettenführung 30, 31 ausgebildet.

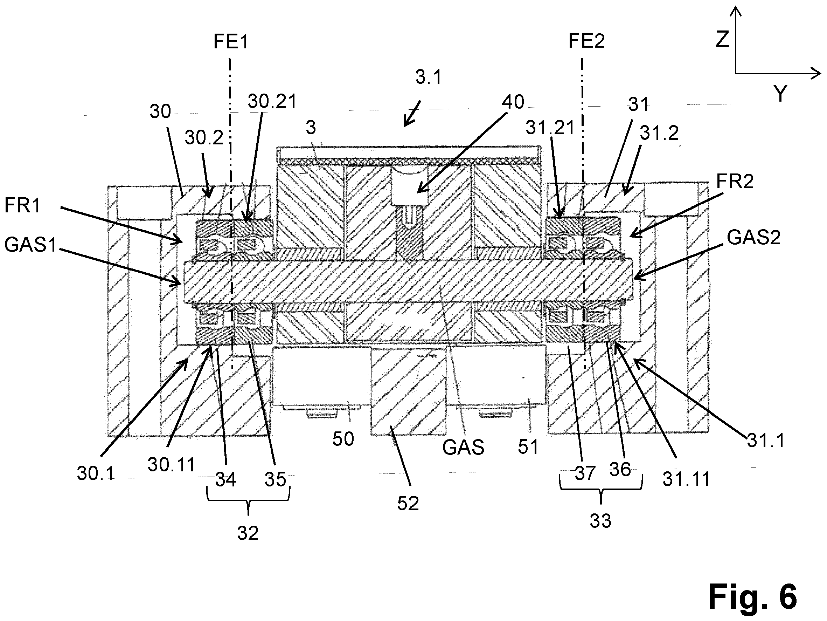

Wie insbesondere in der Figur 6 gezeigt, ist die jeweilige Gelenkachse GAS eines entsprechenden Kettengelenkes 20 dabei an einem ersten freien Ende GAS1 mit der ersten Führungs- und Lagereinrichtung 32 in der ersten Transportpalettenführung 30 und an einem zweiten freien Ende GAS2 mit der zweiten Führungs- und Lagereinrichtung 33 in der zweiten Transportpalettenführung 31 geführt und zwar insbesondere in zwei gegenüberliegenden und parallel zur Transportrichtung A sowie damit vorzugsweise lotrecht zur Gelenkachse GAS orientierten Führungsebenen FE1, FE2. Mithin bildet die erste und zweite Transportpalettenführungen 30, 31 in der Ausführungsvariante der Figur 6 damit eine horizontale Führung zumindest in dem jeweils geradlinigen Abschnitt 13, 14 entlang der Transportstrecke TS für die jeweilige Gelenkachse GAS aus.

Zudem umfassen die erste und zweite Führungs- und Lagereinrichtung 32, 33 hierfür jeweils wenigstens ein erstes und zweites Rollenlager 34...37, das beispielsweise als um die Gelenkachse GAS des entsprechenden Kettengelenks 20 drehbar gelagerte Laufrolle ausgebildet sein kann, und die zwischen einer ersten und zweiten, einander gegenüberliegenden und parallel zur Gelenkachse GAS verlaufenden Führungsfläche 30.1, 30.2 bzw. 31.1, 31.2 der jeweiligen ersten und zweiten Transportpalettenführung 30, 31 geführt sind.

Insbesondere sind dabei das erste und zweite Rollenlager 34, 35 der ersten Führungs- und Lagerrichtung 32 zwischen den einander gegenüberliegenden und parallel zur Gelenkachse GAS verlaufenden Führungsflächen 30.1, 30.2 der ersten Transportpalettenführung 30 und das erste und zweite Rollenlager 36, 37 der zweiten Führungs- und Lagereinrichtung 33 zwischen den einander gegenüberliegenden und parallel zur Gelenkachse GAS verlaufenden Führungsflächen 31.1, 31.2 der zweiten Transportpalettenführung 31 geführt. Somit ist das erste und zweite Rollenlager 34...37 der jeweiligen ersten und zweiten Führungs- und Lagerrichtung 32, 33 zwischen den jeweiligen Führungsfläche 30.1, 30.2 bzw. 31.1, 31.2 der entsprechenden ersten bzw. zweiten Transportpalettenführung 30, 31 parallel der Transportrichtung A geführt und damit insbesondere lotrecht der Führungsebenen FE1 und FE2.

Dabei ist insbesondere vorgesehen, dass das erste Rollenlager 34 der ersten Führungs- und Lagereinrichtung 32 im Bereich des ersten freien Endes GAS1 um die Gelenkachse GAS drehbar an dieser vorgesehen ist, während das zweite Rollenlager 35 auf der dem zweiten freien Ende GAS2 zugewandten Seite des ersten Rollenlagers 34 ebenfalls um die Gelenkachse GAS drehbar an dieser vorgesehen ist und zwar dem ersten Rollenlager 34 vorzugsweise unmittelbar benachbart anschließend, beispielsweise kontaktschlüssig anschließend. Bezogen auf die Längserstreckung der Gelenkachse GAS bildet das erste Rollenlager 34 der ersten Führungs- und Lagereinrichtung 32 ein erstes äußeres Rollenlager 34 und das zweite Rollenlager 35 ein zweites inneres Rollenlager 35 aus, das entlang der Gelenkachse GAS um näherungsweise die Breite des ersten äußeren Rollenlagers 34 in Richtung des zweiten freien Endes GAS2 versetzt an der Gelenkachse GAS unmittelbar benachbart dem ersten äußeren Rollenlager 34 vorgesehen ist.

Auf Grund des spiegelsymmetrischen Aufbaus ist das erste Rollenlager 36 der zweiten Führungs- und Lagereinrichtung 33 im Bereich des zweiten freien Endes GAS2 um die Gelenkachse GAS drehbar vorgesehen, während das zweite Rollenlager 37 auf der dem ersten freien Ende GAS1 zugewandten Seite des ersten Rollenlagers 36 ebenfalls um die Gelenkachse GAS drehbar vorgesehen und zwar dem ersten Rollenlager 36 vorzugsweise unmittelbar benachbart anschließend, beispielsweise kontaktschlüssig anschließend. Bezogen auf die Längserstreckung der Gelenkachse GAS bildet damit das erste Rollenlager 36 der zweiten Führungs- und Lagereinrichtung 33 ein erstes äußeres Rollenlager 36 und das zweite Rollenlager 37 ein zweites inneres Rollenlager 37 aus, das entlang der Gelenkachse GAS um näherungsweise die Breite des ersten äußeren Rollenlagers 36 in Richtung des ersten freien Endes GAS1 versetzt an der Gelenkachse GAS unmittelbar benachbart dem ersten äußeren Rollenlager 36 vorgesehen ist.

Dabei sind das jeweilige erste Rollenlager 34, 36 der ersten und zweiten Führungs- und Lagereinrichtung 32, 33 in einem ersten Anlageabschnitt 30.11, 31.11 der jeweiligen ersten Führungsfläche 30.1, 31.1 und das zweite Rollenlager 35, 37 in einem jeweiligen zweiten Anlageabschnitt 30.21, 31.21 der jeweiligen zweiten Führungsfläche 30.2, 31.2 anliegend und zueinander vorgespannt geführt, wobei der jeweilige erste und zweite Anlageabschnitt 30.11 und 30.21 bzw. 31.11 und 31.21 entlang der Gelenkachse GAS zueinander versetzt und einander gegenüberliegend vorgesehen sind.

Vorteilhaft ist das erste Rollenlager 34 der ersten Führungs- und Lagereinrichtung 32 an dem ersten Anlageabschnitt 30.11 der ersten Führungsfläche 30.1 anliegend gegen das an dem zweiten Anlageabschnitt 30.21 der zweiten Führungsfläche 30.2 anliegende zweite Rollenlager 35 in der ersten Transportpalettenführung 30 vorgespannt geführt und das erste Rollenlager 36 der zweiten Führungs- und Lagereinrichtung 33 an dem ersten Anlageabschnitt 31.11 der ersten Führungsfläche 31.1 anliegend gegen das an dem zweiten Anlageabschnitt 31.21 der zweiten Führungsfläche 31.2 anliegende zweite Rollenlager 37 in der zweiten Transportpalettenführung 31 vorgespannt geführt.

Ferner vorteilhaft ist das erste Rollenlager 34 der ersten Führungs- und Lagereinrichtung 32 an dem ersten Anlageabschnitt 30.11 der ersten Führungsfläche 30.1 anliegend und das an dem zweiten Anlageabschnitt 30.21 der zweiten Führungsfläche 30.2 anliegende zweite Rollenlager 35 in der ersten Transportpalettenführung 30 vorgespannt geführt gegenüber dem an dem ersten Anlageabschnitt 31.11 der ersten Führungsfläche 31.1 anliegenden ersten Rollenlager 36 der zweiten Führungs- und Lagereinrichtung 33 und dem an dem zweiten Anlageabschnitt 31.21 der zweiten Führungsfläche 31.2 anliegend geführten zweiten Rollenlager 37 der zweiten Transportpalettenführung 31.

Durch die vorgespannte Führung der Gelenkachse GAS in der ersten und zweiten Transportpalettenführung 30, 31 wirken im Bereich der ersten Führungs- und Lagereinrichtung 32 jeweils von dem ersten bzw. zweiten Anlageabschnitt 30.11, 30.21 der ersten Transportpalettenführung 30 lotrecht auf die Gelenkachse GAS gerichtete Vorspannkräfte, die somit entlang der Gelenkachse GAS versetzt und gegenüberliegend, also aufeinander zu gerichtet sind und damit ein Verspannen der ersten Führungs- und Lagereinrichtung 32 entlang der Längserstreckung der Gelenkachse GAS in der ersten Führungseinrichtung 30 gegenüber der in der zweiten Transportpalettenführung 31 geführten zweiten Führungs- und Lagereinrichtung 33 sicherstellen, während im Bereich der zweiten Führungs- und Lagereinrichtung 33 jeweils von dem ersten bzw. zweiten Anlageabschnitt 31.11, 31.21 der zweiten Transportpalettenführung 31 lotrecht auf die Gelenkachse GAS gerichtete Vorspannkräfte, die somit entlang der Gelenkachse GAS versetzt und gegenüberliegend, also aufeinander zu gerichtet sind und damit ein Verspannen zweiten ersten Führungs- und Lagereinrichtung 33 entlang der Längserstreckung der Gelenkachse GAS in der zweiten Transportpalettenführung 31 gegenüber der in der ersten Transportpalettenführung 30 geführten ersten Führungs- und Lagereinrichtung 32 sicherstellen.

Die erste Transportpalettenführung 30 bildet hierfür zwischen der ersten und zweiten Führungsfläche 30.1, 30.2 einen ersten Führungsraum FR1 aus, der im Bereich der ersten und zweiten Anlagefläche 30.11, 30.21 in den ersten Führungsraum FR1 zurückspringt, also in diesem Bereich gestuft ausgebildet ist, derart, dass die erste Führungsrolle 34 der ersten Führungs- und Lagereinrichtung 32 an der ersten Führungsfläche 30.1 im Bereich des in den ersten Führungsraum FR1 zurückspringenden ersten Anlageabschnitt 30.11 anliegt und die zweite Führungsrolle 35 an der zweiten Führungsfläche 30.2 im Bereich des in den ersten Führungsraum FR1 zurückspringenden zweiten Anlageabschnittes 30.21 anliegt, während die zweite Führungsrolle 35 der ersten Führungs- und Lagereinrichtung 32 an dem nicht in ersten den Führungsraum FR1 zurückspringenden Teilabschnitt von der ersten Führungsfläche 30.1 frei kommt, also insbesondere nicht anliegt und die erste Führungsrolle 34 von dem nicht in den ersten Führungsraum FR1 zurückspringenden Teilabschnitt der zweiten Führungsfläche 30.2 freikommt.

Zudem bildet auch die zweite Transportpalettenführung 31 zwischen der ersten und zweiten Führungsfläche 31.1, 31.2 einen zweiten Führungsraum FR2 aus, der im Bereich der ersten und zweiten Anlagefläche 31.11, 31.21 in den zweiten Führungsraum FR2 zurückspringt, also in diesem Bereich gestuft ausgebildet ist, derart, dass die erste Führungsrolle 36 der zweiten Führungs- und Lagereinrichtung 33 an der ersten Führungsfläche 31.1 im Bereich des in den zweiten Führungsraum FR2 zurückspringenden ersten Anlageabschnitt 31.11 anliegt und die zweite Führungsrolle 37 an der zweiten Führungsfläche 31.2 im Bereich des in den zweiten Führungsraum FR2 zurückspringenden zweiten Anlageabschnittes 31.21 anliegt, während die zweite Führungsrolle 37 der zweiten Führungs- und Lagereinrichtung 33 an dem nicht in zweiten den Führungsraum FR2 zurückspringenden Teilabschnitt von der ersten Führungsfläche 31.1 frei kommt, also insbesondere nicht anliegt und die erste Führungsrolle 36 von dem nicht in den zweiten Führungsraum FR2 zurückspringenden Teilabschnitt der zweiten Führungsfläche 31.2 freikommt.

Wird das Transportelement 2 in Transportrichtung A gefördert, so drehen sich die ersten und zweiten Rollenlager 34...37 hierdurch jeweils gegensinnig zueinander um die durch die Gelenkachse GAS gebildete Drehachse. Dabei kann die Gelenkachse GAS über ein Haltemittel 40, beispielsweise eine Madenschrauben, fest aber lösbar in einem Gelenkabschnitt 20.1 der jeweiligen Transportpalette 3 fixiert sein und an einer Drehung, also einer Rotation um die Längserstreckung der Gelenkachse GAS, gehindert werden. Die gegensinnige Drehung der jeweiligen ersten Rollenlager 34, 36 zu den jeweiligen zweiten Rollenlager 35, 37 entsteht durch die jeweils gestufte Ausbildung der entsprechenden ersten und zweiten Führungsräume FR1, FR2, so dass sich die ersten Rollenlager 34, 36 nur an dem ersten Anlageabschnitt, 30.11, 31.11 der jeweiligen ersten Führungsfläche 30.1, 31.1 und die zweiten Rollenlager 35, 37 nur an dem zweiten Anlagenabschnitt 30.21, 31.21 der jeweiligen zweiten Führungsfläche 30.2, 31.2 anliegend abrollen bzw. abwälzen.

Dabei zeigt die Figur 6 eine Ausführungsvariante der Transportpaletten 3, bei der sich zwischen zwei benachbarten Gelenkachsen GAS an der der Oberseite 3.1 gegenüberliegenden Unterseite 3.2 zwei weitere drehbare Rollenlager 50, 51 an der entsprechenden Transportpalette 3 angeordnet befinden, die in der darstellten Ausführungsvariante zur vertikalen Führung der Transportpaletten 3 zwischen der ersten und zweiten Transportpalettenführung 30, 31 sowie einer zwischen den beiden Rollenlagern 50, 51 vorgesehenen weiteren Führungsschiene 52 geführt sind. Die Führungsschiene 52 kann dabei an der ersten und zweiten Transportpalettenführung 30, 31, insbesondere an deren Unterseite, die beispielsweise einen Führungseinrichtungsboden ausbildet, angeordnet, insbesondere verschraubt sein. Insbesondere liegen die beiden Rollenlagen 40,51 hierfür insbesondere an der sich parallel zur Transportrichtung A erstreckenden mittleren Führungsschiene 52 und wälzen bzw. rollen sich an dieser ab.

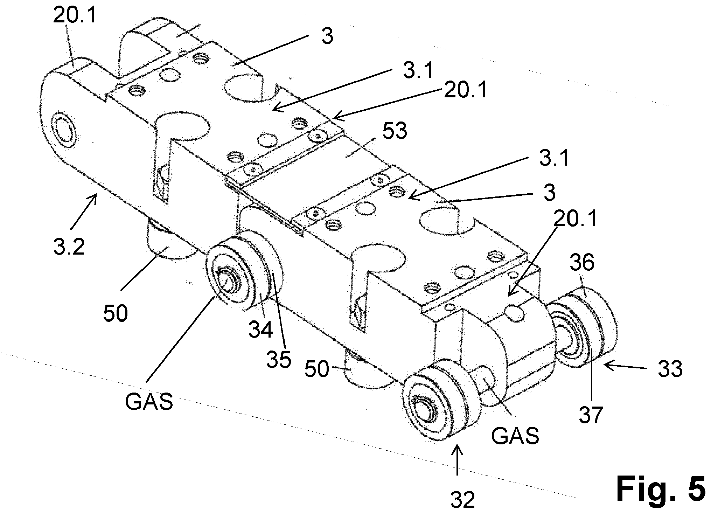

Figur 5 zeigt in perspektivischer Darstellung eine beispielhafte Ausführungsvariante zweier freigestellter und gelenkig über ein Kettengelenk 20 miteinander verbundener Transportpaletten 3 des erfindungsgemäßen Transportsystems 1. Insbesondere weisen die Transportpaletten 3 dabei in ihrem jeweiligen Gelenkabschnitt 20.1 an ihren jeweiligen Oberseiten 3.1 einen elastischen Verbindungsabschnitt 53 auf, der den jeweiligen Gelenkabschnitt 20.1 zweier benachbarter Transportpaletten 3 elastisch überspannt. Insbesondere kann der Verbindungsabschnitt 53 elastisch vorgespannt an den jeweiligen Oberseiten 3.1 zweier benachbarter Transportpaletten 3 angeordnet, insbesondere angenietet, sein. Der Verbindungsabschnitt 53 kann aus einem elastischen natürlichen und/oder künstlichen Textilgewebe hergestellt sein.

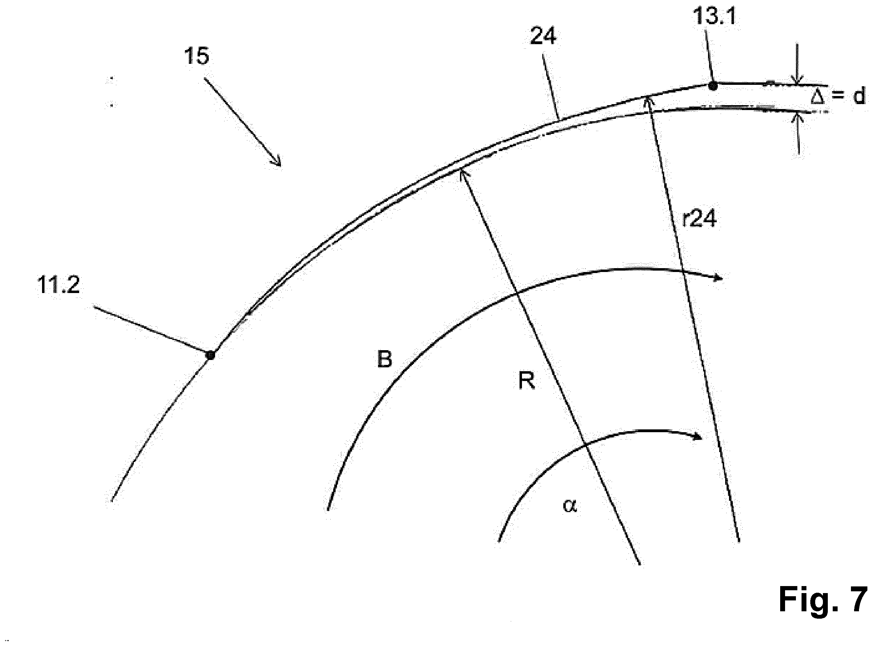

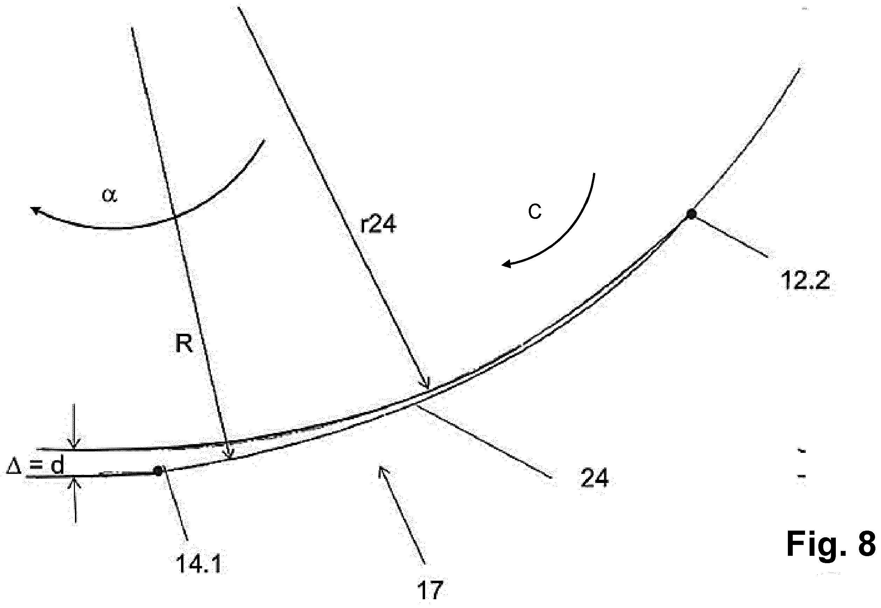

An den Abschnitten 15 und 17 ist die erste und zweite Transportpalettenführung 30, 31 so ausgebildet, dass sich zumindest die ersten Rollenlager 34, 36 einer entsprechenden Gelenkachse GAS eines Kettengelenkes 20 auf einer Ausgleichskurve 24 bewegen bzw. an der Ausgleichskurve 24 geführt werden, die entsprechend den Fig. 7 und 8 mit zunehmendem Winkelbereich $\alpha$ (in Drehrichtung B bzw. C um die Achse 4.1 bzw. 5.1) vom Transportpalettenauslauf 11.2 bzw. 12.2 radial zur Achse 4.1 bzw. 5.1 einen gemäß einer Klothoidenkurve sich verändernden Abstand $\Delta$ von dem Teilkreis 8.1 aufweist, wie dies in den Fig. 7 und 8 dargestellt ist. Insbesondere ist die verwendete Klothoide so parametrisiert, dass der Abstand zur Kreislinie des Kettenrades $\Delta$ während des Durchlaufens der Ausgleichskurve zunimmt und beim Übergang in den geradlinigen Abschnitt den Wert d aufweist. Dieser Wert ergibt sich aus den Parametern der Klothoiden oder im Wesentlichen klothoidenförmigen Kurve durch einen mathematischen funktionalen Zusammenhang. Dabei ist mit R der Radius des Teilkreises 8.1, d.h. der Achsabstand bezeichnet, der zwischen der Achse 4.1 bzw. 5.1 und der Gelenkachse GAS zwischen zwei Transportpaletten 3 besteht, wenn sich diese Gelenkachse GAS auf dem Abschnitt 11 bzw. 12 der Umlauf- oder Bewegungsbahn 10 befindet. Mit r24 ist dort der radiale Abstand der Ausgleichskurve 24 von der Achse 4.1 bzw. 5.1 bezeichnet.

Bezogen auf jeweils eine Ebene, die die Winkelhalbierende der Drehbewegung des Kettenrades 4 bzw. 5 zwischen dem Transportpaletteneinlauf 11.1 und dem Transportpalettenauslauf 11.2 bzw. zwischen dem Transportpaletteneinlauf 12.1 und dem Transportpalettenauslauf 12.2 einschließt und die senkrecht zur XY-Ebene orientiert ist, ist der Verlauf der Ausgleichskurven 24a an den Abschnitten 16 und 18 beispielsweise spiegelsymmetrisch zu den Ausgleichskurven 24 ausgebildet. Insbesondere weisen die Ausgleichskurven 24, 24a jedoch denselben relativen Verlauf in Bezug auf den erzeugten Abstand $\Delta$ auf dem jeweiligen Winkelbereich $\alpha$, $\beta$ auf.

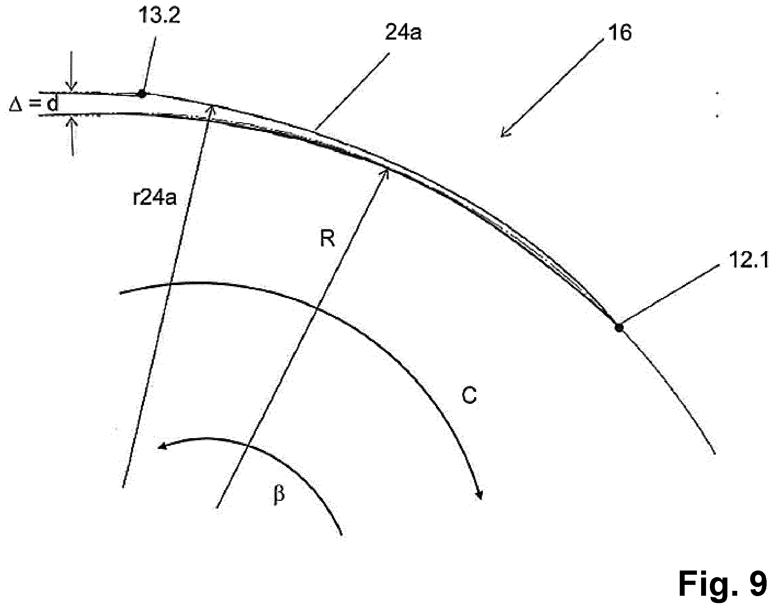

Weiterhin ist bei der dargestellten Ausführungsform die Ausgleichskurve 24 am Transportpalettenauslauf 11.2 bzw. 12.2 jedes Kettenrades 4 bzw. 5 spiegelsymmetrisch zu der Ausgleichskurve 24a des Transportpaletteneinlaufs 11.1 bzw. 12.1 des jeweils anderen Kettenrades 5 bzw. 4 ausgeführt ist, und zwar bezogen auf eine Mittelebene EM2, die die Y-Achse und die Z-Achse einschließt und senkrecht zu einer Verbindungslinie zwischen den Achsen 4.1 und 5.1 der Kettenräder 4 und 5 orientiert ist. Der Verlauf der Ausgleichskurven 24a der Abschnitte 16 und 18 ist in den Figuren 8 und 9 dargestellt. Für die Ausgleichskurven 24a ergibt sich ein Verlauf des Abstandes $\Delta$, der dem Verlauf dieses Abstandes $\Delta$ bei den Ausgleichskurven 24 entspricht, allerdings in Abhängigkeit von einem Winkelbereich $\beta$ (entgegen der Drehrichtung B bzw. C um die Achse 4.1 bzw. 5.1) vom Transportpaletteneinlauf 11.1 bzw. 12.1.

Erfindungsgemäß sind dabei die Ausgleichskurven 24, 24a zumindest abschnittsweise, also zumindest eine Teillänge ihrer Gesamtlänge, als Klothoide bzw. als eine im Wesentlichen klothoidenförmige Kurve ausgebildet.

Nachfolgend wird näher auf bevorzugte Ausformungen der als Klothoide ausgebildeten Ausgleichskurven 24, 24a und deren Dimensionierungen eingegangen. Eine Klothoide ist eine Kurve, bei der sich die Krümmung linear mit der Bogenlänge, auch als Klothoidenlänge bezeichnet, ändert. Damit gilt

$$s \cdot r = const. \quad \text{(Gleichung 1)}$$

wobei s die Klothoidenlänge und r der Radius des Krümmungskreises in dem Punkt der Klothoide ist, der entlang der Klothoide um die Länge s vom Startpunkt der Klothoide entfernt ist.

Diese Konstante wird häufig durch einen Klothoidenparameter a ausgedrückt, so dass gilt:

$$s\,r = \frac{1}{2a^2} \quad \text{(Gleichung 2)}$$

Sei $\theta$ der Tangentenwinkel zwischen der Haupttangente HT zu Beginn der Klothoide (d.h. am Übergang vom geraden Abschnitt in die Klothoide) und der Tangente an einem Kurvenpunkt der Klothoide. Da die Krümmung einer ebenen Kurve der Änderung des Winkels $\theta$ sowie dem reziproken Wert des Krümmungsradius entspricht, erhält man

$$\frac{d\theta}{ds} = \frac{1}{r} = 2a^2 s \qquad \text{(Gleichung 3)}$$

wobei sich die rechte Seite aus Gleichung 2 ergibt.

Durch Integration dieser Gleichung nach s erhält man somit einen quadratischen Zusammenhang zwischen $\theta$ und $s$, d.h.

$$\theta(s) = (as)^2 \qquad \text{(Gleichung 4)}$$

Dadurch erhält man die Formeln für die kartesischen Koordinaten x,y, welche oben aufgeführt sind.

Die Wahl der Klothoidenkenngrößen ergibt sich aus den geomerischen Anforderungen des Transportsystems. Insbesondere erscheint es vorteilhaft, den Klothoidenparameter und die Klothoidenlänge aus den Parametern $\gamma$ und R zu berechnen. Der Winkel ist vorzugsweise so wie oben angegeben zu wählen. Die gesamte Klothoidenlänge liegt dann vorzugsweise im Bereich zwischen 5mm und 250 mm.

Durch die vorgenannte Parametrisierung der als Klothoide ausgebildeten Ausgleichskurven 24, 24a wird eine gleichmäßige Umlenkung im Sinne eines gleichmäßigen Aufbaus der Radialbeschleunigung (proportional der Zentripetalkraft) auf die Transportpalette 3 erreicht. Insbesondere wird dadurch der Verschleiß am Transportelement 3 bei hohen Fördergeschwindigkeiten von vorzugsweise 2,5 m/s minimiert.

Dabei kann vorgesehen sein, dass sich die Ausgleichskurven 24, 24a in Transportrichtung A gesehen jeweils vollständig als Klothoide zwischen dem entsprechenden Transportpaletteneinlauf 11.1, 12.1 und einem zugehörigen Transportpalettenauslauf 13.2, 14.2 der linearen Führung mittels der Transportpalettenführungen 30, 31 und zwischen dem Transportpalettenauslauf 11.2, 12.2 und einem zugehörigen Transportpaletteneinlauf 13.1, 14.1 der linearen Führung mittels der Transportpalettenführungen 30, 31 erstrecken.

Auch können sich die Ausgleichskurven 24, 24a jeweils über einen Winkelbereich $\alpha$ und/oder $\beta$ zwischen 5° Grad und 45° Grad erstrecken, der in Abhängigkeit des Teilungswinkels TW der Kettenrad-Eingriff- oder Mitnahmebereiche 8 eingestellt ist. Hier kann dann, wenn der Teilungswinkel TW der Kettenrad-Eingriff-oder Mitnahmebereiche 8 zwischen 15° Grad und 45° Grad beträgt, das entsprechende Kettenrad 4, 5 zwischen 8-teilig und 24-teilig ausgebildet sein.

Besonders vorteilhaft ist vorgesehen, dass zumindest eine Ausgleichskurve 24, 24a einteilig, insbesondere einstückig, mit dem Teilkreis 8.1 ausgebildet ist, auf dem die Transportpaletten 3 zwischen dem Transportpaletteneinlauf 11.1, 12.1 und dem Transportpalettenauslauf 11.2, 12.2 radial zu einer jeweiligen Achse 4.1, 5.1 geführt sind, indem die zumindest eine Ausgleichskurve 24, 24a und der Teilkreis 8.1 als einteilige Umlenkeinrichtung U, insbesondere in Form einer Umlenkkurve, ausgebildet sind.

Dabei beträgt die Fördergeschwindigkeit des Transportelementes 3 zwischen 2 m/s und 3 m/s, vorzugsweise im Wesentlichen 2,5 m/s.

Ebenfalls vorteilhaft kann vorgesehen sein, dass bezogen auf die Transportrichtung A die auf den Transportpalettenauslauf 11.2, 12.2 des jeweiligen Kettenrades 4, 5 und/oder Umlenkeinrichtung U folgende Ausgleichskurve 24 einen derartigen Verlauf aufweist, dass ein Abstand $\Delta$ zwischen dieser Ausgleichskurve 24 und dem Teilkreis 8.1 in Drehrichtung B, C des Kettenrades 4, 5 mit zunehmendem Winkelabstand $\alpha$ von dem Transportpalettenauslauf 11.2, 12.2 einen klothoidenförmigen Verlauf aufweist. In diesem Zusammenhang kann auch bezogen auf die Transportrichtung A die dem Transportpaletteneinlauf 11.1, 12.1 des jeweiligen Kettenrades 4, 5 und/oder Umlenkeinrichtung U vorausgehende Ausgleichskurve 24a einen derartigen Verlauf aufweisen, dass der Abstand $\Delta$ zwischen dieser Ausgleichskurve 24a und dem Teilkreis 8.1 entgegen der Drehrichtung B, C des Kettenrades 4, 5 mit zunehmendem Winkelabstand $\beta$ von dem Transportpaletteneinlauf 11.1, 12.1 einen klothoiden-förmigen Verlauf aufweist.

Die Erfindung wurde voranstehend an Ausführungsbeispielen beschrieben.

Bezugszeichenliste

| | |
|---|---|
| 1 | Transportsystem |
| 2 | Kettenartigen Transportelement |
| 3 | Transportpalette |
| 3.1 | Oberseite |
| 3.11 | Aufnahme |
| 3.2 | Unterseite |
| 4, 5 | Kettenrad |
| 4.1, 5.1 | Achse des Kettenrades |
| 6 | Antriebsrotor (Torquemotor) |
| 7 | Maschinengestellt |
| 8 | Kettenrad-Eingriff- oder Mitnahmebereich oder Kettenradausnehmung |
| 8.1 | Teilkreis der Ausnehmungen 8 |
| 9 | Produkt oder Werkstück |
| 10 | Bewegungsbahn der Transportpaletten 3 |
| 11-18 | Abschnitte der Bewegungsbahn 10 |
| 20 | Kettengelenk |
| 20.1 | Gelenkabschnitt |
| 24, 24a | Ausgleichskurve |
| 30 | erste Transportpalettenführung |
| 30.1 | erste Führungsfläche |
| 30.11 | erster Anlageabschnitt |
| 30.2 | zweite Führungsfläche |
| 30.21 | zweiter Anlageabschnitt |
| 31 | zweite Transportpalettenführung |
| 31.1 | erste Führungsfläche |
| 31.11 | erster Anlageabschnitt |
| 31.2 | zweite Führungsfläche |
| 31.21 | zweiter Anlageabschnitt |
| 32 | erste Führungs- und Lagereinrichtung |

| 33 | zweite Führungs- und Lagereinrichtung |
| 34...37 | Rollenlager |
| 40 | Haltemittel |
| 50 | Rollenlager |
| 51 | Rollenlager |
| 52 | Führungsschiene |
| A | Transportrichtung der Transportpaletten 3 |
| BC | Drehrichtung der Kettenräder 4 und 5 |
| EM1, EM2 | Mittelebene |
| E4, E5 | Ebene |
| KL | Kettengliedlänge |
| d | Versatz |
| R | Radius des Teilkreises 8.1 |
| r24 | radiale Abstand der Ausgleichskurve 24 |
| r24a | radiale Abstand der Ausgleichskurve 24a |
| Δ | Abstand zwischen Ausgleichskurve 24/24a und Teilkreis 8.1 |
| GAS | Gelenkachse |
| GAS1 | erstes freies Ende |
| GAS2 | zweites freies Ende |
| FE1 | erste Führungsebene |
| FE2 | zweite Führungsebene |
| FR1 | erster Führungsraum |
| FR2 | zweiter Führungsraum |
| TS | Transportstrecke |
| TF | Transportfläche |
| U | Umlenkeinrichtung |

**Patentansprüche**

1. Transportsystem zur Beförderung von Gegenständen entlang einer Transportstrecke (TS), umfassend wenigstens ein Transportelement (2), welches aus einer Vielzahl von über Kettengelenke (20) gelenkig miteinander zu einer geschlossenen Schleife verbundenen Kettengliedern besteht und über wenigstens ein Kettenrad (4, 5) in zumindest einer Transportrichtung (A) umlaufend getaktet oder kontinuierlich antreibbar ist, wobei die Kettenglieder als Transportpaletten (3) ausgebildet sind, wobei an dem wenigstens einen Kettenrad (4, 5) in einem vorgegebenen Teilungswinkel (TW) Kettenrad-Eingriff- oder Mitnahmebereiche (8) vorgesehen sind, in die an den Kettengelenken (20) der Transportpaletten (3) ausgebildete Führungs- und Lagereinrichtungen (32, 33) bei sich umlaufenden Kettenrad (4, 5) auf jeweils zumindest einem Teilkreis (8.1) eingreifen, auf dem die Transportpaletten (3) zwischen einem Transportpaletteneinlauf (11.1, 12.1) und einem Transportpalettenauslauf (11.2, 12.2) radial zu einer jeweiligen Achse (4.1, 5.1) des wenigstens einen Kettenrades (4, 5) geführt sind, wobei weiterhin Transportpalettenführungen (30, 31) zum linearen Führen der Führungs- und Lagereinrichtungen (32, 33) der Transportpaletten (3) zwischen den mittels des wenigstens einen Kettenrades (4, 5) ausgebildeten radialen Umlenkungen zu einer geschlossenen Bewegungsbahn (10) vorgesehen sind, wobei bezogen auf die Transportrichtung (A) jeweils zwischen einem Transportpaletteneinlauf (11.1, 12.1) und der entsprechenden linearen Führung mittels der Transportpalettenführungen (30, 31) und zwischen einem Transportpalettenauslauf (11.2, 12.2) und der entsprechenden linearen Führung mittels der Transportpalettenführungen (30, 31) jeweils eine Ausgleichskurve (24, 24a) vorgesehen ist, entlang der die Führungs- und Lagereinrichtungen (32, 33) der Transportpaletten (3) für einen Polygonausgleich geführt sind, **dadurch gekennzeichnet, dass** die Ausgleichskurven (24, 24a) zumindest abschnittweise als Klothoide oder im Wesentlichen als Klothoide ausgebildet sind und dass die Klothoidenform der zumindest einen Ausgleichskurve (24, 24a) durch folgende Formeln und kartesische Koordinaten beschrieben ist, wobei γ der Winkel ist, unter dem die Klothoide in den Kreis übergeht, und r der Radius des Krümmungskreises am Ende der Klothoide, welcher im konkreten Anwendungsfall der Radius des Kettenrades ist, wobei dadurch die Klothoide, beginnend im Punkt (0,0) wie folgt mathematisch beschrieben ist

$$x = \int_0^L \cos((f(s))^2)\,ds$$

$$y = \int_0^L \sin((f(s))^2)\,ds$$

wobei L die Länge der Klothoide und f(s) eine Funktion ist, die im Wesentlichen eine quadratische Funktion der Form $s \mapsto (as)^2$ ist, wobei der Klothoidenparameter a sich aus γ und R gemäß folgender Formeln

$$\Lambda = \gamma \frac{\pi}{180°} \cdot 2R$$

$$a = \sqrt{\frac{1}{2r \cdot \Lambda}}$$

ergibt, und wobei der Winkel γ in Grad angegeben ist.

2. Transportsystem nach Anspruch 1, **dadurch gekennzeichnet, dass** sich die Ausgleichskurven (24, 24a) in Transportrichtung (A) gesehen jeweils vollständig als Klothoide zwischen dem entsprechenden Transportpaletteneinlauf (11.1, 12.1) und einem zugehörigen Transportpalettenauslauf (13.2, 14.2) der linearen Führung mittels der Transportpalettenführungen (30, 31) und zwischen dem Transportpalettenauslauf (11.2, 12.2) und einem zugehörigen Transportpaletteneinlauf (13.1, 14.1) der linearen Führung mittels der Transportpalettenführungen (30, 31) erstrecken.

3. Transportsystem nach Anspruch 1 oder 2, **dadurch gekennzeichnet, dass** sich die Ausgleichskurven (24, 24a) jeweils über einen Winkelbereich ($\alpha$, $\beta$) erstrecken, welcher frei wählbar ist, wobei das Intervall in welchem dieser frei gewählt werden kann vom Teilungswinkels (TW) der Kettenrad-Eingriff-oder Mitnahmebereiche (8) abhängig ist.

4. Transportsystem nach einem der vorhergehenden Ansprüche, **dadurch gekennzeichnet, dass** der Teilungswinkel (TW) der Kettenrad-Eingriff-oder Mitnahmebereiche (8) zwischen 15° Grad und 45° Grad, vorzugsweise 15° Grad oder 45° Grad beträgt, so dass das entsprechende Kettenrad (4, 5) zwischen 8-teilig und 24-teilig, vorzugsweise 8-teilig oder 24-teilig, ausgebildet ist.

5. Transportsystem nach einem der vorhergehenden Ansprüche, **dadurch gekennzeichnet, dass** zumindest eine Ausgleichskurve (24, 24a) einteilig, insbesondere einstückig, mit dem entsprechenden Teilkreis (8.1) ausgebildet ist, auf dem die Transportpaletten (3) zwischen dem Transportpaletteneinlauf (11.1, 12.1) und dem Transportpalettenauslauf (11.2, 12.2) radial zu einer jeweiligen Achse (4.1, 5.1) geführt sind, indem die zumindest eine Ausgleichskurve (24, 24a) und der Teilkreis (8.1) als einteilige Umlenkeinrichtung (U), insbesondere in Form einer Umlenkkurve, ausgebildet sind.

6. Transportsystem nach einem der vorhergehenden Ansprüche, **dadurch gekennzeichnet, dass** die Fördergeschwindigkeit des Transportelementes (3) im kontinuierlichen Betrieb zwischen 2 m/s und 3 m/s, vorzugsweise im Wesentlichen 2,5 m/s, beträgt.

7. Transportsystem nach einem der vorhergehenden Ansprüche, **dadurch gekennzeichnet, dass** bezogen auf die Transportrichtung (A) die auf den Transportpalettenauslauf (11.2, 12.2) des jeweiligen Kettenrades (4, 5) und/oder Umlenkeinrichtung (U) folgende Ausgleichskurve (24) einen derartigen Verlauf aufweist, dass ein Abstand ($\Delta$) zwischen dieser Ausgleichskurve (24) und dem Teilkreis (8.1) in Drehrichtung (B, C) des Kettenrades (4, 5) mit zunehmendem Winkelabstand ($\alpha$) von dem Transportpalettenauslauf (11.2, 12.2) einen klothoiden-förmigen Verlauf aufweist.

8. Transportsystem nach einem der vorhergehenden Ansprüche, **dadurch gekennzeichnet, dass** bezogen auf die Transportrichtung (A) die dem Transportpaletteneinlauf (11.1, 12.1) des jeweiligen Kettenrades (4, 5) und/oder Umlenkeinrichtung (U) vorausgehende Ausgleichskurve (24a) einen derartigen Verlauf aufweist, dass der Abstand ($\Delta$) zwischen dieser Ausgleichskurve (24a) und dem Teilkreis (8.1) entgegen der Drehrichtung (B, C) des Kettenrades (4,5) mit zunehmendem Winkelabstand ($\beta$) von dem Transportpaletteneinlauf (11.1, 12.1) einen klothoiden-förmigen Verlauf aufweist.

9. Transportsystem nach Anspruch 1, **dadurch gekennzeichnet, dass** der Tangentenwinkel $\Upsilon$ im Bereich zwischen 360/2n und 90-360/2n gewählt ist, wobei n die Teilung des Kettenrades ist, insbesondere zwischen 15° und 75° für n=24, besonders bevorzugt zu etwa 20°.

10. Transportsystem nach einem der vorhergehenden Ansprüche, **dadurch gekennzeichnet, dass** die Transportpaletten (3) zumindest abschnittsweise entlang der Transportstrecke (TS) beidseitig mittels einer ersten und zweiten Führungseinrichtung (30, 31) geführt sind, bei dem ein Kettengelenk (20) jeweils eine zwischen der ersten und zweiten Führungseinrichtung (30, 31) verlaufende Gelenkachse (GAS) aufweist, die an einem ersten freien Ende (GAS1) mit einer ersten Führungs- und Lagereinrichtung (32) in der ersten Führungseinrichtung (30) und an einem zweiten freien Ende (GAS2) mit einer zweiten Führungs- und Lagereinrichtung (33) in der zweiten Führungseinrichtung (31) geführt ist, wobei die erste und zweite Führungs- und Lagereinrichtung (32, 33) jeweils wenigstens ein erstes und zweites Rollenlager (34...37) umfassen, die zwischen einer ersten und zweiten, einander gegenüberliegenden und parallel zur Gelenkachse (GAS) verlaufenden Führungsfläche (30.1 und 30.2 bzw. 31.1 und 31.2) der jeweiligen Führungseinrichtung (30, 31) geführt sind, wobei das erste Rollenlager (34, 36) in einem ersten Anlageabschnitt (30.11, 31.11) der ersten Führungsfläche (30.1, 31.1) und das zweite Rollenlager (35, 37) in einem zweiten Anlageabschnitt (30.21, 31.21) der zweiten Führungsfläche (30.2, 31.2) anliegen und zueinander vorgespannt geführt sind, wobei der erste und zweite Anlageabschnitt (30.11 und 30.21 bzw. 31.11 und 31.21) entlang der Gelenkachse (AS) zueinander versetzt und einander gegenüberliegend sind.

11. Transportsystem nach Anspruch 10, **dadurch gekennzeichnet, dass** die beiden freien Enden (GAS1, GAS2) der Gelenkachse (GAS) in der ersten und zweiten Führungseinrichtung (30, 31) in zwei gegenüberliegend und parallel zur Transportrichtung (A) orientierte Führungsebenen (FE1, FE2) geführt sind.

12. Transportsystem nach Anspruch 10 oder 11, **dadurch gekennzeichnet, dass** das erste und zweite Rollenlager (34, 35) der ersten Führungs- und Lagereinrichtung (32) um die Gelenkachse (GAS) drehbar und unmittelbar benachbart an dieser im Bereich des ersten freien Endes (GAS1) vorgesehen sind und/oder dass das erste und zweite Rollenlager (36, 37) der zweiten Führungs- und Lagereinrichtung (33) um die Gelenkachse (GAS) drehbar und unmittelbar benachbart an dieser im Bereich des zweiten freien Endes (GAS2) vorgesehen sind.

13. Transportsystem nach einem der vorangehenden Ansprüche 10 bis 12, **dadurch gekennzeichnet, dass** das erste Rollenlager (34) der ersten Führungs- und Lagereinrichtung (32) an dem ersten Anlageabschnitt (30.11) der ersten Führungsfläche (30.1) anliegend gegen das an dem zweiten Anlageabschnitt (30.21) der zweiten Führungsfläche (30.2) anliegende zweite Rollenlager (35) in der ersten Führungseinrichtung (30) vorgespannt geführt ist und das erste Rollenlager (36) der zweiten Führungs- und Lagereinrichtung (33) an dem ersten Anlageabschnitt (31.11) der ersten Führungsfläche (31.1) anliegend gegen das an dem zweiten Anlageabschnitt (31.21) der zweiten Führungsfläche (31.2) anliegende zweite Rollenlager (37) in der zweiten Führungseinrichtung (31) vorgespannt geführt ist und/oder dass das erste und zweite Rollenlager (34, 35) der ersten Führungs- und Lagereinrichtung (32) vorgespannt gegenüber dem ersten und zweiten Rollenlager (36, 37) der zweiten Führungs- und Lagereinrichtung (33) geführt sind.

14. Transportsystem nach einem der vorangehenden Ansprüche, **dadurch gekennzeichnet, dass** die Klothoide der jeweiligen Ausgleichkurve (24, 24a) derart eingestellt ist, dass die Transportpaletten (3) in dem entsprechenden geradlinigen Abschnitt (13, 14) einen Gleichlauf mit dem zumindest einem Kettenrad (4, 5) ausbilden, so dass die Fördergeschwindigkeit der Transportpaletten (3) in den Abschnitt (13, 14) proportional zur Winkelgeschwindigkeit des zumindest einen Kettenrades (4, 5) ausgebildet ist.

15. Transportsystem nach einem der vorangehenden Ansprüche, **dadurch gekennzeichnet, dass** der Transportpaletteneinlauf (13.1) des Abschnittes (13) sowie der Transportpalettenauslauf (14.2) des Abschnittes (14) sich gegenüber einer die Achse (4.1) einschließenden horizontalen Ebene (E4) in Richtung einer Mittelebene (EM2) versetzt ist und die entsprechende Ausgleichskurve (24, 24a) bis an den in Richtung der Mittelebene (EM2) versetzten Transportpaletteneinlauf (13.1) und Transportpalettenauslauf (14.2) erstreckt und/oder dass der Transportpalettenauslauf (13.2) des Abschnittes (14) sowie der Transportpaletteneinlauf (14.1) des Abschnittes (14) sich gegenüber einer die Achse (5.1) einschließenden horizontalen Ebene (E5) in Richtung einer Mittelebene (EM2) versetzt ist und die entsprechende Ausgleichskurve (24, 24a) bis an den in Richtung der Mittelebene (EM2) versetzten Transportpaletteneinlauf (14.1) und Transportpalettenauslauf (13.2) erstreckt.

16. Behandlungsmaschine, beispielsweise Montage- und/oder Fertigungsautomat, mit einem Transportsystem (1) mit Transportpaletten (3) zur Aufnahme von Produkten oder Gegenständen (9), wobei die Transportpaletten (3) auf einer in sich geschlossenen Bewegungsbahn (10) bewegt, vorzugsweise getaktet bewegt werden, und an der Bewegungsbahn (10) Arbeitsstationen vorgesehen sind, **dadurch gekennzeichnet, dass** das Transportsystem (1) nach einem der vorherigen Ansprüche ausgebildet ist.

## Claims

1. Transport system for conveying objects along a transport route (TS), comprising at least one conveying element (2), which consists of a plurality of chain members connected to one another in an articulated manner via chain joints (20) so as to form a closed loop and which can be driven intermittantly or continuously via at least one sprocket wheel (4, 5) so as to circulate in at least one transport direction (A), wherein the chain members are designed as transport pallets (3), wherein sprocket-wheel engagement or entrainment areas (8) are provided on the at least one sprocket wheel (4, 5) at a predetermined pitch angle (TW), wherein guiding and bearing devices (32, 33) configured on the chain joints (20) of the transport pallets (3) engage with the sprocket-wheel engagement or entrainment areas (8) of the revolving sprocket wheel (4, 5) on respectively at least one pitch circle (8.1) on which the transport pallets (3) are guided radially to a respective axis (4.1, 5.1) of the at least one sprocket wheel (4, 5) between a transport pallet inlet (11.1, 12.1) and a transport pallet outlet (11.2, 12.2), wherein transport pallet guides (30, 31) for the linear guidance of the guiding and bearing devices (32, 33) of the transport pallets (3) are additionally provided between the radial deflections formed by means of the at least one sprocket wheel (4, 5) so as to form a closed path of movement (10), wherein, in relation to the transport direction (A), a compensation curve (24, 24a) is respectively provided between a transport pallet inlet (11.1, 12.1) and the corresponding linear guide by means of the transport pallet guides (30, 31) and between a transport pallet outlet (11.2, 12.2) and the corresponding linear guide by means of the transport pallet guides (30, 31), along which compensation curves (24, 24a) the guiding and bearing devices (32, 33) of the transport pallets (3) are guided for a polygonal compensation, **characterized in that** the compensation curves (24, 24a) are configured at least in sections as a clothoid or essentially as a clothoid and **in that** the clothoid form of the at least one compensation curve (24, 24a) is described by the following formulae and Cartesian coordinates, where $\gamma$ is the angle at which the clothoid merges into the circle, and r is the radius of the circle of curvature at the end of the clothoid, which in this specific application is the radius of the sprocket wheel, wherein the clothoid, starting at the point (0, 0), is thus mathematically described as follows

$$x = \int_0^L \cos((f(s))^2)\, ds$$

$$y = \int_0^L \sin((f(s))^2)\, ds$$

where L is the length of the clothoid and f(s) is a function that is essentially a quadratic function of the form $s \mapsto (as)^2$, wherein the clothoid parameter a results from $\gamma$ and R according to the following formulae

$$\Lambda = \gamma \frac{\pi}{180°} \cdot 2R$$

$$a = \sqrt{\frac{1}{2r \cdot \Lambda}}$$

and wherein the angle $\gamma$ is indicated in degrees.

2. Transport system according to claim 1, **characterized in that** the compensation curves (24, 24a), viewed in the transport direction (A), respectively extend entirely in the form of a clothoid between the corresponding transport pallet inlet (11.1, 12.1) and an associated transport pallet outlet (13.2, 14.2) of the linear guide by means of the transport pallet guides (30, 31) and between the transport pallet outlet (11.2, 12.2) and an associated transport pallet inlet (13.1, 14.1) of the linear guide by means of the transport pallet guides (30, 31).

3. Transport system according to claim 1 or 2, **characterized in that** the compensation curves (24, 24a) respectively extend over an angular range ($\alpha$, $\beta$) that can be chosen freely, wherein the interval in which this range can be chosen freely depends on the pitch angle (TW) of the sprocket-wheel engagement or entrainment areas (8).

4. Transport system according to one of the preceding claims, **characterized in that** the pitch angle (TW) of the sprocket-wheel engagement or entrainment areas (8) lies between 15° degrees and 45° degrees, preferably is 15° degrees or 45° degrees, so that the corresponding sprocket wheel (4, 5) is configured to comprise between 8 parts and 24 parts, preferably 8 parts or 24 parts.

5. Transport system according to one of the preceding claims, **characterized in that** at least one compensation curve (24, 24a) is configured to be of one part, in particular of one piece, with the corresponding pitch circle (8.1) on which the transport pallets (3) are guided radially to a respective axis (4.1, 5.1) between the transport pallet inlet (11.1, 12.1) and the transport pallet outlet (11.2, 12.2) by designing the at least one compensation curve (24, 24a) and the pitch circle (8.1) as a deflection device (U) of one part, in particular in the form of a deflection curve.

6. Transport system according to one of the preceding claims, **characterized in that** the conveying speed of the transport element (3) in a continuous operation is between 2 m/s and 3 m/s, preferably essentially 2.5 m/s.

7. Transport system according to one of the preceding claims, **characterized in that**, in relation to the transport direction (A), the compensation curve (24) that follows the transport pallet outlet (11.2, 12.2) of the respective sprocket wheel (4, 5) and/or deflection device (U) comprises a path such that a distance ($\Delta$) between this compensation curve (24) and the pitch circle (8.1) in the direction of rotation (B, C) of the sprocket wheel (4, 5) exhibits a clothoidal path with increasing angular distance ($\alpha$) from the transport pallet outlet (11.2, 12.2).

8. Transport system according to one of the preceding claims, **characterized in that**, in relation to the transport direction (A), the compensation curve (24a) that precedes the transport pallet inlet (11.1, 12.1) of the respective sprocket wheel (4, 5) and/or deflection device (U) comprises a path such that the distance ($\Delta$) between this compensation curve (24a) and the pitch circle (8.1) against the direction of rotation (B, C) of the sprocket wheel (4, 5) exhibits a clothoidal path with increasing angular distance ($\beta$) from the transport pallet inlet (11.1, 12.1).

9. Transport system according to claim 1, **characterized in that** the tangent angle $\gamma$ is chosen in the range between 360/2n and 90-360/2n, wherein n is the partition of the sprocket wheel, in particular between 15° and 75° for n=24, particularly preferably approximately 20°.

10. Transport system according to one of the preceding claims, **characterized in that** the transport pallets (3) are guided at least in sections along the transport route (TS) on both sides by means of a first and a second guide device (30, 31), wherein a chain joint (20) respectively comprises a joint axis (GAS) extending between the first and the second guide device (30, 31), which guide axis (GAS) is guided at a first free end (GAS1) by a first guiding and bearing device (32) in the first guide device (30) and at a second free end (GAS2) by a second guiding and bearing device (33) in the second guide device (31), wherein the first and second guiding and bearing devices (32, 33) respectively comprise at least a first and a second roller bearing (34 ... 37), which are guided between a first and a second guide surface (30.1 and 30.2, and 31.1 and 31.2, respectively) of the respective guide device (30, 31), which guide surfaces (30.1, 30.2; 31.1, 31.2) lie opposite one another and extend parallel to the joint axis (GAS), wherein the first roller bearing (34, 36) abuts in a first contact section (30.11, 31.11) of the first guide surface (30.1, 31.1) and the second roller bearing (35, 37) abuts in a second contact section (30.21, 31.21) of the second guide surface (30.2, 31.2), the roller bearings being guided so as to be preloaded relative to each other, wherein the first and the second contact section (30.11 and 30.21, and 31.11 and 31.21, respectively) are offset relative to each other and lie opposite each other along the joint axis (AS).

11. Transport system according to claim 10, **characterized in that** the two free ends (GAS1, GAS2) of the joint axis (GAS) are guided in the first and in the second guide device (30, 31) in two guide planes (FE1, FE2) that are oriented opposite each other and parallel to the transport direction (A).

12. Transport system according to claim 10 or 11, **characterized in that** the first and the second roller bearing (34, 35) of the first guiding and bearing device (32) are provided so as to be rotatable about the joint axis (GAS) and directly adjacent to the same in the area of the first free end (GAS1) and/or **in that** the first and the second roller bearing (36, 37) of the second guide and bearing device (33) are provided so as to be rotatable about the joint axis (GAS) and directly adjacent to the same in the area of the second free end (GAS2).

13. Transport system according to one of the preceding claims 10 to 12, **characterized in that** the first roller bearing (34) of the first guiding and bearing device (32), which lies in contact with the first contact section (30.11) of the first guide surface (30.1), is guided so as to be preloaded in the first guide device (30) against the second roller bearing (35), which lies in contact with the second contact section (30.21) of the second guide surface (30.2), and the first roller bearing (36) of the second guiding and bearing device (33), which lies in contact with the first contact section (31.11) of the first guide surface (31.1), is guided so as to be preloaded in the second guide device (31) against the second roller bearing (37), which lies in contact with the second contact section (31.21) of the second guide surface (31.2), and/or **in that** the first and the second roller bearing (34, 35) of the first guiding and bearing device (32) are guided so as to be preloaded with respect to the first and the second roller bearing (36, 37) of the second guiding and bearing device (33).

14. Transport system according to one of the preceding claims, **characterized in that** the clothoid of the respective compensation curve (24, 24a) is configured in such a manner that the transport pallets (3) in the corresponding rectilinear section (13, 14) move in synchrony with the at least one sprocket wheel (4, 5), so that the conveying speed of the transport pallets (3) in the section (13, 14) is proportional to the angular speed of the at least one sprocket wheel (4, 5).

15. Transport system according to one of the preceding claims, **characterized in that** the transport pallet inlet (13.1) of the section (13) and the transport pallet outlet (14.2) of the section (14) are offset with respect to a horizontal plane (E4) comprising the axis (4.1) in the direction of a central plane (EM2) and the corresponding compensation curve (24, 24a) extends up to the transport pallet inlet (13.1) and the transport pallet outlet (14.2) which are offset in the direction of the central plane (EM2) and/or **in that** the transport pallet outlet (13.2) of the section (14) and the transport pallet inlet (14.1) of the section (14) are offset with respect to a horizontal plane (E5) comprising the axis (5.1) in the direction of a central plane (EM2) and the corresponding compensation curve (24, 24a) extends up to the transport pallet inlet (14.1) and the transport pallet outlet (13.2) which are offset in the direction of the central plane (EM2).

16. Processing machine, for example an automated assembly and/or manufacturing machine, with a transport system (1) with transport pallets (3) for receiving products or objects (9), wherein the transport pallets (3) are moved on a closed path of movement (10), preferably intermittantly, and work stations are provided at the path of movement (10),

**characterized in that**
the transport system (1) is configured according to one of the preceding claims.

## Revendications

**1.** Système de transport, destiné à convoyer des objets le long d'un trajet de transport (TS), comprenant au moins un élément de transport (2), lequel est constitué d'une pluralité de maillons de chaîne assemblés les uns aux autres de manière articulée par l'intermédiaire d'articulations de chaîne (20) en une boucle fermée et lequel est susceptible d'être entraîné en circonférence de manière cadencée ou continue par l'intermédiaire d'au moins un pignon (4, 5) dans au moins une direction de transport (A), les maillons de chaîne étant constitués sous la forme de palettes de transport (3), sur l'au moins un pignon (4, 5) selon un angle de pas (TW) prédéfini étant prévues des zones d'engagement ou d'entraînement (8) du pignon dans lesquelles des dispositifs de guidage et d'appui (32, 33) constitués sur les articulations de chaîne (20) des palettes de transport (3) s'engagent lorsque le pignon (4, 5) est en rotation dans chaque fois au moins un cercle partiel (8.1), sur lequel les palettes de transport (3) sont guidées entre une entrée (11.1, 12.1) de palettes de transport et une sortie (11.2, 12.2) de palettes de transport, en direction radiale par rapport à un axe (4.1, 5.1) respectif de l'au moins un pignon (4, 5), par ailleurs, des guidages (30, 31) de palettes de transport destinés au guidage linéaire des dispositifs de guidage et d'appui (32, 33) des palettes de transport (3) étant prévus en une trajectoire de déplacement (10) fermée, entre les renvois radiaux constitués au moyen de l'au moins un pignon (4, 5), en rapport à la direction de transport (A), chaque fois entre une entrée (11.1, 12.1) de palettes de transport et le guidage linéaire correspondant, au moyen des guidages (30, 31) de palettes de transport et entre une sortie (11.2, 12.2) de palettes de transport et le guidage linéaire correspondant, au moyen des guidages (30, 31) de palettes de transport étant prévue chaque fois une courbe de compensation (24, 24a) le long de laquelle les dispositifs de guidage et d'appui (32, 33) des palettes de transport (3) sont guidées pour une compensation polygonale, **caractérisé en ce que** les courbes de compensation (24, 24a) sont conçues au moins par endroits sous la forme de clothoïdes ou sensiblement sous la forme de clothoïdes et **en ce que** la forme clothoïde de l'au moins une courbe de compensation (24, 24a) est décrite par les formules et coordonnées cartésiennes suivantes, $\gamma$ étant l'angle sous lequel la clothoïde passe dans le cercle et r étant le rayon du cercle osculateur à l'extrémité de la clothoïde, lequel, dans le cas d'application concret est le rayon du pignon, de ce fait, la clothoïde qui commence au point (0,0) étant décrite mathématiquement selon les termes suivants :

$$x = \int_0^L \cos\left(\left(f(S)\right)^2\right) ds$$

$$y = \int_0^L \sin\left((f(S))\right)^2 ds$$

L étant la longueur de la clothoïde et f(S) étant une fonction qui est sensiblement une fonction quadratique de forme $s \mapsto (as)^2$, le paramètre clothoïde a résultant de y et de R selon la formule suivante :

$$\lambda = \gamma \frac{\pi}{180°} \cdot 2R$$

$$\alpha = \sqrt{\frac{1}{2r \cdot \lambda}}$$

et l'angle y étant mentionné en degrés.

**2.** Système de transport selon la revendication 1, **caractérisé en ce que**, considérées dans la direction de transport (A), les courbes de compensation (24, 24a) s'étendent chacune totalement sous la forme de clothoïde entre l'entrée (11.1, 12.1) de palettes de transport correspondante et une sortie (13.2, 14.2) de palettes de transport associée du guidage linéaire au moyen des guidages (30, 31) de palettes de transport et entre la sortie (11.2, 12.2) de palettes de transport et une entrée (13.1, 14.1) de palettes de transport associée du guidage linéaire au moyen des guidages (30, 31) de palettes de transport.

**3.** Système de transport selon la revendication 1 ou 2, **caractérisé en ce que** les courbes de compensation (24, 24a) s'étendent chacune sur une plage angulaire ($\alpha$, $\beta$) qui est librement sélectionnable, l'intervalle dans lequel celle-ci peut être librement sélectionnée dépendant de l'angle de pas (TW) des zones d'engagement ou d'entraînement (8) du pignon.

**4.** Système de transport selon l'une quelconque des revendications précédentes, **caractérisé en ce que** l'angle de pas (TW) des zones d'engagement ou d'entraînement (8) du pignon est compris entre 15° degrés et 45° degrés, est de préférence de 15° degrés ou de 45° degrés, de telle sorte que le pignon (4, 5) correspondant soit conçue en 8 parties et en 24 parties, de préférence en 8 parties ou en 24 parties.

**5.** Système de transport selon l'une quelconque des revendications précédentes, **caractérisé en ce qu'**au moins une courbe de compensation (24, 24a) est conçue en une partie, notamment d'un seul tenant avec le cercle partiel (8.1) correspondant sur lequel les palettes de transport (3) sont guidées entre l'entrée (11.1, 12.1) de palettes de transport et la sortie (11.2, 12.2) de palettes de transport, en direction radiale vers un axe (4.1, 5.1) respectif, **en ce que** l'au moins une courbe de compensation (24, 24a) et le cercle partiel (8.1) sont conçus sous la forme d'un dispositif de renvoi (U) en une partie, notamment sous la forme d'une courbe de renvoi.

**6.** Système de transport selon l'une quelconque des revendications précédentes, **caractérisé en ce que** la vitesse de convoyage de l'élément de transport (3) en régime continu est comprise entre 2 m/s et 3 m/s, s'élève de préférence à sensiblement 2,5 m/s.

**7.** Système de transport selon l'une quelconque des revendications précédentes, **caractérisé en ce qu'**en rapport à la direction de transport (A), la courbe de compensation (24) suivant la sortie (11.2, 12.2) de palettes de transport du pignon (4, 5) et/ou le dispositif de renvoi (U) concerné présente un tracé tel qu'un écart ($\Delta$) entre ladite courbe de compensation (24) et le cercle partiel (8.1) dans la direction de rotation (B, C) du pignon (4, 5) présente avec un écart angulaire ($\alpha$) croissant par rapport à la sortie (11.2, 12.2) de palettes de transport un tracé de forme clothoïde.

**8.** Système de transport selon l'une quelconque des revendications précédentes, **caractérisé en ce qu'**en rapport à la direction de transport (A), la courbe de compensation (24a) précédant l'entrée (11.1, 12.1) de palettes de transport du pignon (4, 5) concerné et/ou le dispositif de renvoi (U) présente un tracé tel que l'écart ($\Delta$) entre ladite courbe de compensation (24a) et le cercle partiel (8.1) à l'encontre de la direction de rotation (B, C) du pignon (4, 5) présente avec un écart angulaire (ß) croissant par rapport à l'entrée (11.1, 12.1) de palettes de transport un tracé de forme clothoïde.

**9.** Système de transport selon la revendication 1, **caractérisé en ce que** l'angle tangentiel y est sélectionné dans la plage comprise entre 360/2n et 90-360/2n, n étant la division du pignon notamment comprise entre 15° et 75° pour n = 24, s'élevant de manière particulièrement préférentielle à environ 20°.

**10.** Système de transport selon l'une quelconque des revendications précédentes, **caractérisé en ce que** les palettes de transport (3) sont guidées au moins par endroits le long du trajet de transport (TS) de part et d'autre au moyen d'un premier et d'un deuxième dispositif de guidage (30, 31), sur lequel une articulation de chaîne (20) comporte chaque fois un axe d'articulation (GAS) s'écoulant entre le premier et le deuxième dispositifs de guidage (30, 31), qui sur une première extrémité (GAS1) libre est guidé par un premier dispositif de guidage et d'appui (32) dans le premier dispositif de guidage (30), et sur une deuxième extrémité (GAS2) libre, est guidé par un deuxième dispositif de guidage et d'appui (33) dans le deuxième dispositif de guidage (31), le premier et le deuxième dispositifs de guidage et d'appui (32, 33) comprenant chacun au moins un premier et un deuxième roulement à rouleaux (34 ... 37) qui sont guidés entre une première et une deuxième surfaces de guidage (30.1 et 30.2 ou 31.1 et 31.2) du dispositif de guidage (30, 31) concerné, mutuellement opposées et s'écoulant à la parallèle de l'axe d'articulation (GAS), le premier roulement à rouleaux (34, 36) étant adjacent dans un premier segment d'appui (30.11, 31.11) de la première surface de guidage (30.1, 31.1) et le deuxième roulement à rouleaux (35, 37) étant adjacent dans un deuxième segment d'appui (30.21, 31.21) de la deuxième surface de guidage (30.2, 31.2) et étant guidés en étant précontraints l'un par rapport à l'autre, le premier et le deuxième segments d'appui (30.11 et 30.21 ou 31.11 et 31.21) étant décalés l'un par rapport à l'autre et mutuellement opposés le long de l'axe d'articulation (AS).

**11.** Système de transport selon la revendication 10, **caractérisé en ce que** les deux extrémités (GAS1, GAS2) libres de l'axe d'articulation (GAS) dans le premier et le deuxième dispositifs de guidage (30, 31) sont guidées dans deux plans de guidage (FE1, FE2) opposés et orientés à la parallèle de la direction de transport (A).

**12.** Système de transport selon la revendication 10 ou 11, **caractérisé en ce que** le premier et le deuxième roulements à rouleaux (34, 35) du premier dispositif de guidage et d'appui (32) sont prévus en étant rotatifs autour de l'axe d'articulation (GAS) et au voisinage direct de celui-ci, dans la zone de la première extrémité (GAS1) libre et/ou **en ce que** le premier et le deuxième roulements à rouleaux (36, 37) du deuxième dispositif de guidage et d'appui (33) sont prévus en étant rotatifs autour de l'axe d'articulation (GAS) et au voisinage direct de celui-ci, dans la zone de la deuxième extrémité (GAS2) libre.

**13.** Système de transport selon l'une quelconque des revendications 10 à 12 précédentes, **caractérisé en ce qu'**en étant adjacent au premier segment d'appui (30.11) de la première surface de guidage (30.1), le premier roulement à rouleaux (34) du premier dispositif de guidage et d'appui (32) est guidé en étant précontraint contre le deuxième roulement à rouleaux (35) adjacent au deuxième segment d'appui (30.21) de la deuxième surface de guidage (30.2) dans le premier dispositif de guidage (30) et **en ce qu'**en étant adjacent au premier segment d'appui (31.11) de la première surface de guidage (31.1), le premier roulement à rouleaux (36) du deuxième dispositif de guidage et d'appui (33) est guidé en étant précontraint contre le deuxième roulement à rouleaux (37) adjacent au deuxième segment d'appui (31.21) de la deuxième surface de guidage (31.2) dans le deuxième dispositif de guidage (31) et/ou **en ce que** le premier et le deuxième roulements à rouleaux (34, 35) du premier dispositif de guidage et d'appui (32) sont guidés en étant précontraints par rapport au premier et au deuxième roulements à rouleaux (36, 37) du deuxième dispositif de guidage et d'appui (33).

14. Système de transport selon l'une quelconque des revendications précédentes, **caractérisé en ce que** la clothoïde de la courbe de compensation (24, 24a) concernée est réglée de telle sorte que les palettes de transport (3) constituent dans le segment (13, 14) rectiligne correspondant un synchronisme avec l'au moins un pignon (4, 5), de sorte que la vitesse de convoyage des palettes de transport (3) dans le segment (13, 14) soit conçue de manière proportionnelle à la vitesse angulaire de l'au moins un pignon (4, 5).

15. Système de transport selon l'une quelconque des revendications précédentes, **caractérisé en ce que** l'entrée (13.1) des palettes de transport du segment (13), ainsi que la sortie (14.2) des palettes de transport du segment (14) sont décalées par rapport à un plan horizontal (E4) incluant l'axe (4.1) en direction d'un plan médian (EM2) et la courbe de compensation (24, 24a) correspondante s'étend jusqu'à l'entrée (13.1) des palettes de transport et à la sortie (14.2) des palettes de transport décalées dans la direction du plan médian (EM2) et/ou **en ce que** la sortie (13.2) des palettes de transport du segment (14), ainsi que l'entrée (14.1) des palettes de transport du segment (14) sont décalées par rapport à un plan horizontal (E5) incluant l'axe (5.1) en direction d'un plan médian (EM2) et la courbe de compensation (24, 24a) correspondante s'étend jusqu'à l'entrée (14.1) des palettes de transport et la sortie (13.2) des palettes de transport décalées dans la direction du plan médian (EM2).

16. Machine de traitement, par exemple automate de montage et/ou de fabrication, pourvue d'un système de transport (1) avec des palettes de transport (3) pour la réception de produits ou d'objets (9), les palettes de transport (3) étant déplacées sur une trajectoire de déplacement (10) fermée, de préférence de manière cadencée et sur la trajectoire de déplacement (10) étant prévus des postes de travail,

**caractérisée en ce que**
le système de transport (1) est constitué selon l'une quelconque des revendications précédentes.

1

3.1

30    7

5.1

A, Ts

4.1

Z

Y    X

30

2

10    3

6

Fig. 1

EP 3 954 634 B1

Fig. 2

Fig. 3

EP 3 954 634 B1

Fig. 4a

EP 3 954 634 B1

**Fig. 4b**

**Fig. 4c**

Fig. 5

EP 3 954 634 B1

Fig. 6

**Fig. 7**

EP 3 954 634 B1

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012104213 A1
- DE 102015107113 A1

- DE 102018100409 A1